# EUROPEAN PATENT APPLICATION

(11) **EP 4 390 667 A1**
(43) Date of publication of application: **26.06.2024**
(21) Application number: 22216301.6
(22) Date of filing: 23.12.2022
(51) Int. Cl.: G06F 8/35, G06F 8/36, G06F 8/10, G05B 19/05, G05B 19/042, G05B 19/418

(54) **METHOD AND SYSTEM FOR AUTOMATIC GENERATION OF ENGINEERING PROGRAM FOR ENGINEERING PROJECTS**

(71) Applicant: Siemens Aktiengesellschaft, 80333 München (DE)
(72) Inventor: Antony, Elvis, 560102 Bangalore, Karnataka (IN); Oruganti, Srivathsa Simha, 560100 Bangalore, Karnataka (IN); S, Subramanyam, 641041 Comabatore (IN)
(74) Representative: Isarpatent

(57) **Abstract**

The present invention provides a method and system for automatic generation of an engineering program for an engineering project. The method comprises generating a name graph based on an analysis of a plurality of engineering projects. The method further comprises generating a plurality of knowledge graph templates for the plurality of processes implemented in the plurality of engineering projects. Furthermore, the method comprises receiving a process and instrumentation diagram associated with the engineering project (106). The method further comprises determining a set of processes in the engineering project based on an application of an image processing algorithm on the process and instrumentation diagram. The method further comprsies generating an engineering program for the set of engineering objects of the engineering project based on a set of knowledge graph templates.

## Description

The present invention relates to a field of engineering of computer assisted programming, and more particularly relates to a method and system for automatic generation of engineering program for engineering project.

An engineering project comprises a plurality of engineering objects which function together to complete a plurality of industrial processes in the engineering project. Examples of the plurality of engineering objects includes but is not limited to a programmable logic controller, one or more field devices, or any other automation devices. Examples of the one or more field devices includes but is not limited to, motors, rotors, mixers, furnaces, heaters, refrigerators, control valves, pumps, and actuators.

The engineering project is configured to execute an engineering program to control the plurality of engineering objects to perform the plurality of industrial processes in a technical installation. Examples of the technical installation includes but is not limited to a power plant, a manufacturing plant, and a water treatment plant. The engineering program comprises programming code which is executed by a programmable logic controller to control the plurality of engineering objects in the engineering project. In one example, the engineering program comprises programming code written in at least one of an International electrotechnical commission programming language (IECPL), JAVA, C++ or python.

In conventional systems, the engineering program is coded by a human code developer. To code the engineering program efficiently, the human code developer has to study and analyze a plurality of parameters associated with the engineering project as well as a plurality of parameters associated with each engineering object of the plurality of engineering objects.

Each engineering object of the plurality of engineering objects has a plurality of variants which are manufactured by one or more original equipment manufacturers. Each variant of the plurality of variants of a specific engineering object differs from other variants in one or more attributes such as power rating, voltage rating, software configurations, and hardware configurations. In one example, the plurality of parameters of the plurality of engineering objects comprises information associated with the plurality of variants of the plurality of engineering objects.

In one example, a first engineering object is a motor which has a plurality of variants manufactured by a plurality of manufacturers. Each variant of the plurality of variants differ from each other in voltage rating, power rating, year of manufacturing, vibration resistance, and water resistance. In another example, a second engineering object, such as a heater, has a plurality of variants which are used for a plurality of functionalities in the technical installation. For example, a first variant of the heater is used for heating metals, a second variant of the heater is used for heating gases, and a third variant of the heater is used for heating liquids. The human code developer is required to study information associated with the plurality of variants of each engineering object of the plurality of engineering objects to optimally code the engineering program.

The plurality of parameters associated with a specific engineering object further includes an industrial context associated with the specific engineering object. The industrial context of the specific engineering object is indicative of a functionality for which the specific engineering object is used in the engineering project. In a case where the engineering object is a heater, examples of the industrial contexts for the engineering object includes, but is not limited to a boiling water context, a warming water context, and a heating metal context. A temperature of the heater is dependent on the industrial context of the heater in the engineering project. Thus, the human code developer has to study information associated with the industrial context of each engineering object of the plurality of engineering objects in the engineering project.

The plurality of parameters associated with the engineering project includes but is not limited to a geographical location where the engineering project is implemented, and a domain associated with the engineering project. The domain of the engineering project is indicative of a field of engineering associated with the engineering project. Examples of the domain of the engineering project includes a chemical domain, an electrical domain and a mechanical domain. The human coder is required to study information associated with the geographical location of the engineering project, and also information associated with the domain of the engineering project to optimally code the engineering program. Thus, manually coding the engineering program is a time consuming, difficult, and laborious activity for the human code developer.

In light of above, there exists a need for an efficient method and system for automatic generation of engineering program for an engineering project.

The object of the invention is achieved by a method of automatically generating an engineering program for an engineering project. The engineering project is configured to execute the engineering program to implement a specific objective in a technical installation. Examples of the technical installation includes but is not limited to a power plant, a manufacturing plant, and a water treatment plant.

In a preferred embodiment, the method comprises receiving, by a processing unit, a plurality of engineering projects. The plurality of engineering projects comprises a plurality of engineering objects configured to implement a plurality of industrial processes in the technical installation. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of industrial processes include, but is not limited to a heating process, a cooling process and a melting process.

The plurality of engineering projects comprises engineering projects associated with a plurality of domains. Examples of the plurality of domains includes, but is not limited to a chemical domain, a mechanical domain, a manufacturing domain, and an energy domain. Furthermore, each engineering project of the plurality of engineering projects comprises information associated with a plurality of variants of the plurality of engineering objects. Each variant of the plurality of variants differ from each other in voltage rating, power rating, year of manufacturing, vibration resistance, and water resistance.

Each of the plurality of engineering projects comprises at least one process and instrumentation diagram and a set of programming blocks. The process and instrumentation diagram comprises information associated with interconnection between the plurality of engineering objects in each engineering project of the plurality of engineering projects. The set of prgramming blocks comprises programming code which is executed by a controller device to control operations of the plurality of engineering objects.

In one example, the set of programming blocks are written in a hybrid format comprising a combination of an object-oriented programming format and a process-oriented programming format. In one example, the set of programming blocks comprises a plurality of classes. Each class of the plurality of classes comprises programming logic associated with a specific engineering object of the plurality of engineering objects in the plurality of engineering projects. The plurality of programming blocks further comprises one or more programming blocks associated with each domain of a plurality of domains of the plurality of engineering projects.

In the preferred embodiment, the method further comprises analyzing, by the processing unit, the plurality of engineering projects based on an application of a natural language processing algorithm on the each engineering project of the plurality of engineering projects. In one example, the natural language processing algorithm is at least one of a named entity recognition algorithm, a text summarization algorithm, and a tokenization algorithm. The natural language processing algorithm is configured to extract a plurality of data items from the analyzed plurality of engineering projects. The plurality of data items comprises information associated with each engineering object of the plurality of engineering objects in each engineering project of the plurality of engineering projects. Examples of the information associated with each engineering object comprises a name, a voltage rating, a power rating, a purpose, a function, a specification, a manufacturer details, and a maintenance details associated with the plurality of engineering objects. For example, in a case where the plurality of engineering projects comprises a document which comprises a first statement "voltage rating of motor is 300 volts" and a second statement "a first object is a motor", then the extracted plurality of data items comprises a first data item "first object", a second data item "motor", a third data item "300 volts" and a fourth data item "voltage rating".

In one example, the plurality of engineering projects comprises a process and instrumentation diagram comprising information associated with interconnections between a first object, a second object and a third object. In such a case, the plurality of data items comprises the information about interconnections between the first, the second, and the third objects. Furthermore, the plurality of data items comprises code snippets, object classes, programming logic, subroutines, variables, and code libraries comprised in the set of programming blocks of each engineering project of the plurality of engineering projects.

Furthermore, in a case where the plurality of engineering objects comprises a control philosophy document, the extracted plurality of data items comprises information associated with operational steps associated with the plurality of engineering objects in the plurality of engineering projects. Furthermore, in such a case, the plurality of data items comprises information associated with one or more subsystems, equipment, components, control targets and other variables associated with the plurality of engineering projects.

In another example, the plurality of engineering projects comprises information associated with hardware and software configuration details of each of the plurality of engineering objects of the plurality of engineering projects. In such a case, the plurality of data items comprises information about the hardware configuration such as a voltage rating, a power rating, a purpose, a function, a specification, a manufacturer details, and a maintenance details of each engineering object of the plurality of engineering objects.

Furthermore, the plurality of data items comprises information associated with the software configuration such as details about a software platform, an operating system, supported network protocols and Internet protocol address of each engineering object of the plurality of engineering objects. In the preferred embodiment, the method further comprises analyzing, by the processing unit, the plurality of data items and the plurality of engineering projects by the application of the natural language processing algorithm on the plurality of data items and the plurality of engineering projects.

The method further comprises determining, by the processing unit, a plurality of interrelationships between the plurality of data items and the plurality of engineering objects based on the analysis. In one example, the plurality of engineering projects comprises a document comprising a first statement "voltage rating of motor is 300 volts" and a second statement "a first object is a motor" . In such a case, the processing unit determines a first interrelationship that the first data item (voltage rating) is linked to the second data item (300 volts). Furthermore, the processing unit determines a second interrelationship that the second data item (motor) is linked to the third data item (300 volts).

In other words, the processing unit determines information associated with the plurality of interrelationships between one or more data items of the plurality of data items. Further, the processing unit determines the plurality of interrelationships between the plurality of data items and the plurality of engineering objects of the plurality of engineering projects based on the analysis.

In the preferred embodiment, the method further comprises generating, by the processing unit, a name graph based on the analysis of the plurality of data items and the plurality of engineering projects. In one example, the name graph is generated by the processing unit, by analysis of the determined plurality of data items and the determined plurality of interrelationships. The name graph comprises a plurality of nodes. Each node of the plurality of nodes comprises information associated with a specific engineering object of the plurality of engineering objects of the plurality of engineering projects.

For example, the plurality of nodes comprises a first node comprising information about the first data item "first object", a second node comprising information about the second data item "motor", a third node comprising information about the third data item "300 volts" and a fourth node comprising information about the fourth data item "voltage rating". Furthermore, the name graph comprises a plurality of links between the plurality of nodes to represent the plurality of interrelationships between the plurality of data items.

The plurality of nodes further comprises information associated with the set of programming blocks in each engineering object of the plurality of engineering objects. Examples of the information associated with the set of programming blocks include but is not limited to names of functions, data flow in each of the set of programming blocks, classes in set of programming blocks, variable names, and data types in the set of programming blocks. Information comprised in the plurality of nodes further comprises information associated with hierarchical dependencies between classes, functions, and subroutines within the set of programming blocks. The name graph further comprises information associated with interrelationships between each of the set of programming blocks and each engineering object of the plurality of engineering objects of the plurality of engineering projects. Furthermore, the name graph further comprises information associated with interrelationships between each of the set of programming blocks and one or more industrial contexts of each engineering object of the plurality of engineering objects of the plurality of engineering projects.

The one or more industrial contexts comprises information associated with a domain of each of the plurality of engineering projects. The one or more contexts further comprises information associated with a specific functionality of each engineering object of the plurality of engineering objects of the plurality of engineering projects. For example, in a case where a specific engineering object is a motor, the one or more industrial contexts comprises information associated with a function of the motor in each engineering project of the plurality of engineering projects. In one example, the motor is used in a compressor module of a refrigeration system. In such a case the one or more industrial contexts of the specific engineering object comprises information that the motor is functioning within a context of a compressor. In another example, the motor is used as a driver for a conveyor belt. In such a case the one or more industrial context of the specific engineering object comprises information that the motor is functioning within a context of a compressor.

In the preferred embodiment, the generated name graph has a plurality of dimensions. Each dimension of the plurality of dimensions represents a specific aspect of each engineering project of the plurality of engineering projects. In one example, a first dimension of the plurality of dimensions comprises one or more nodes associated with information associated with a programming code in the set of programming blocks of each of the plurality of engineering projects. The information associated with the programming code comprises information associated with a programming language, list of hierarchies and dependencies, classes, variables, and code snippets in the programming code. Furthermore, a second dimension of the plurality of dimensions comprises one or more nodes comprising information associated with a user interface in each engineering project of the plurality of engineering projects. Furthermore, a third dimension comprises information about the one or more industrial contexts of each engineering object of the plurality of engineering objects. The third dimension further comprises information associated with the plurality of variants of each engineering object of the plurality of engineering objects.

Advantageously, the name graph comprises information associated with interconnections, the plurality of variants, hardware configurations, software configurations, engineering programs, the plurality of industrial contexts, the plurality of domains, and the plurality of functionalities associated with each engineering object of the plurality of engineering objects in the plurality of engineering projects. Furthermore, the name graph comprises information associated with interconnections and dependencies between the plurality of engineering objects and the plurality of variants, the hardware configurations, the software configurations, the engineering programs, the plurality of industrial contexts, the plurality of domains, and the plurality of functionalities of the plurality of engineering objects. Thus, advantageously, the processing unit is configured to extract knowledge from the plurality of engineering objects of the plurality of engineering project.

The name graph further comprises information associated with variations in each variant of the plurality of variants of each engineering object of the plurality of engineering objects. Furthermore, the name graph comprises information associated with a plurality of symbols and notations in one or more process and instrumentation diagrams in the plurality of engineering projects. The plurality of symbols and notations denote control flow and data flow between each engineering object of the plurality of engineering objects.

In one example, the name graph comprises information associated with a specific engineering object, which is a motor. In such a case, the name graph comprises a first set of nodes comprising information associated with a plurality of variants of the motor. Furthermore, a second set of nodes in the name graph comprises information associated with a process and instrumentation diagram icon/template associated with the motor. Furthermore, a third set of nodes in the name graph comprises information associated with a usage template of the motor. The usage template indicates information associated with the motor such as a voltage rating, a power rating, a current rating, a speed, and an input-output port of the motor.

In the preferred embodiment, the method further comprises analyzing, by the processing unit, the name graph to determine a plurality of name graph segments in the name graph. Each of the plurality of name graph segments comprises one or more nodes comprising information about a specific process in a plurality of processes implemented in the plurality of engineering projects. Examples of the specific process comprises but is not limited to a heating process, a cooling process, a transporting process, a chemical process and a mechanical process. In such a case, the plurality of name graph segments are determined based on an analysis of information in the one or more nodes. In such a case, each name graph segment of the plurality of name graph segments comprises information associated with a specific process of the plurality of processes implemented in the plurality of engineering projects.

Each process of the plurality of processes is performed by a combination of two or more engineering objects in the plurality of engineering objects. For example, a process such as a transportation process is performed by a combination of engineering objects comprising a first engineering object such as a conveyor belt in conjunction with a second engineering object such as a autonomous guided vehicle, and a third engineering object such as a pick and place robot. In such a case, each node in a name graph segment associated with the transportation process comprises information associated with at least one of the first, the second, and the third engineering object.

Each node of the plurality of name graph segments comprises information associated with a specific functionality of a specific engineering object of the combination of the tow or more engineering objects. The specific functionality associated with a specific engineering object includes at least one function of a plurality of functions of the specific engineering object. In one example, the specific engineering object is a motor which is used for the plurality of functionalities such as transportation, compression of air, drilling of metals, and milling of powder. In a case where the specific engineering object is used for drilling of metals, then the specific functionality of the specific engineering object is to drill metals.

In another example, the plurality of name graph segments are determined based on an analysis of an arrangement of the plurality of nodes of the name graph. For example, the processing unit is configured to receive from a database, a plurality of name graph structures which are stored in the database. Each of the plurality of name graph structures has a structure in accordance with which a set of nodes of the name graph structure are arranged. The plurality of name graph structures are stored in a database or a knowledge graph repository.

Each name graph structure of the plurality of name graph structures comprises a knowledge graph which indicates a specific process of a plurality of industrial processes. The knowledge graph associated with the specific process comprises information associated with one or more engineering objects which are configured to perform the specific process in a technical installation.

In such a case, the processing unit is configured to compare a structure of a portion of the name graph with a structure of each name graph structure of the plurality of name graph structures. The structure of the portion of the name graph is indicative of an arrangement of two or more nodes in the portion of the name graph and interconnections between the two or more nodes. Thus, the processing unit is configured to determine the specific process by matching the structure with at least one of the plurality of name graph structures.

In another example, the plurality of name graph segments are determined by application of a neural network on the name graph. The neural network is trained on a training data set comprising information associated with the plurality of industrial processes and the plurality of name graph structures.

In another example, the plurality of nodes comprises information associated with an input parameter and an output parameter associated with each of the plurality of engineering objects of the plurality of engineering projects. An input parameter of an engineering object is indicative of information associated with a data type of the input parameter, a size of the input parameter, and a number of input parameters which are received by the engineering object. An output parameter of the engineering object is indicative of information associated with a data type of the output parameter, a size of the output parameter, and a number of output parameters which are output by the engineering object. In such a case, the processing unit is configured to extract information associated with the input parameter and the output parameter from the plurality of nodes. Furthermore, the processing unit, is configured to receive information associated with input parameters and output parameters of a plurality of industrial devices. The processing unit is further configured to compare the input parameters and the output parameters extracted from the plurality of nodes, to the received input and output parameters. The processing unit is further configured to determine the plurality of name graph segments based on the comparison.

The method further comprises analyzing, by the processing unit, the plurality of name graph segments to determine a logic structure of each name graph segment of the plurality of name graph segments. A logic structure of a name graph segment is indicative of an arrangement of two or more nodes in the name graph segment. In one example, the processing unit is configured to determine the logic structure of each name graph segment of the plurality of name graph segment by application of a pattern recognition algorithm on a set of nodes in each name graph segment of the plurality of name graph segments. The processing unit is further configured to compare the logic structure of each name graph segment of the plurality of name graph segments with each other.

The method further comprises determining, by the processing unit, two or more name graph segments from the plurality of name graph segments based on the comparison, such that the determined two or more name graph segments have similar logic structures. In one example, the two or more name graph segments are determined by the processing unit based on a determination that the arrangement of the two or more nodes in each name graph segment of the two or more name graph segments, are similar to each other. In one example, the processing unit is configured to tag the two or more name graph segments together. In other words, the processing unit is configured to generate a plurality of tags for the plurality of name graph segments. Each tag of the plurality of tags indicate two or more nodes, of the plurality of name graph segments, which have similar logic structures.

In the preferred embodiment, the method further comprises determining, by the processing unit, a set of name graph segments which has a plurality of logic structures which are repeated throughout the name graph. In one example, the set of name graph segments are determined by application of a machine learning algorithm on the name graph. The machine learning algorithm is one of a supervised learning algorithm and an unsupervised learning algorithm. In one example, the machine learning algorithm is a pattern recognition algorithm which is configured to determine a plurality of patterns in an arrangement of the plurality of nodes in the name graph. In such a case, the machine learning algorithm is configured to determine that one or more patterns from the plurality of patterns, are repeated throughout the name graph. The set of name graph segments are determined by the processing unit based on an analysis of the one or more patterns which are determined to be repeated throughout the name graph.

One or more nodes of each of the plurality of name graph segments further comprises information associated with connection of one or more engineering objects of the plurality of engineering objects with other engineering objects of the plurality of engineering objects of the plurality of engineering projects. In one example, the one or more engineering object is connected with other engineering objects via at least one of a mechanical connection, a wired communication connection or a wireless communication connection. The information associated with the connection is extracted by the processing unit from a plurality of process and instrumentation diagrams in the plurality of engineering projects. The one or more nodes further comprises information associated with one or more connection diagrams, one or more user ratings, voltage ratings, power ratings, current ratings, information associated with operating systems, communication protocols, and a set of programming blocks associated with the one or more engineering objects of the plurality of engineering objects in the plurality of engineering projects. Thus, in other words, a name graph segment associated with a specific process, comprises information associated with the one or more connection diagrams, the one or more user ratings, the voltage ratings, the power ratings, current ratings, the information associated with operating systems, the communication protocols, and the set of programming blocks associated with a set of engineering objects which are implemented to execute the specific process in at least one of the plurality of engineering projects.

In the preferred embodiment, the method further comprises analyzing, by the processing unit, each name graph segment of the plurality of name graph segments to determine a plurality of parameters associated with the respective name graph segment. The plurality of parameters associated with a name graph segment comprises information indicative of a specific industrial process associated with the name graph segment. In one example, the plurality of parameters associated with a name graph segment comprises information associated with usage references of each of the one or more engineering objects in the plurality of engineering projects. The information associated with the usage references of an engineering object indicates a number and type of instances in which the one or more engineering objects are used in at least one engineering project of the plurality of engineering projects, to execute the specific process in the plurality of engineering projects.

The information associated with the usage references of the one or more engineering object further comprises information associated with a variant type, a version number, a manufacturer details, a model number, and a programming block associated with a usage of the one or more engineering objects in at least one engineering project of the plurality of engineering projects. The plurality of parameters associated with each name graph segment of the plurality of name graph segments further comprises information associated with one or more links of the name graph segment to other name graph segments of the plurality of name graph segments. The plurality of parameters further comprises a list of possible connections of the one or more engineering objects to other engineering objects of the plurality of engineering objects of the plurality of engineering projects.

In one example, the plurality of engineering projects comprises information associated with an optimum set of operational values, an optimum hardware configuration, an optimum software configuration, and a system requirements of each engineering object of the plurality of engineering objects. In such a scenario, information associated with the optimum set of operational values, the optimum hardware configuration, the optimum software configuration, and the system requirements are present in the name graph and the plurality of name graph segments. Thus, the plurality of parameters determined from each name graph segment, comprises the optimum set of operational values, the optimum hardware configuration, the optimum software configuration, and the system requirements associated with the one or more engineering object associated with the name graph segment. It is noted that each name graph segment comprises information associated with a specific process of the plurality of processes. Thus advantageously, each name graph segment comprises the optimum set of operational values, the optimum hardware configuration, the optimum software configuration, and the system requirements associated with the one or more engineering object used to implement the specific process in the plurality of engineering projects.

In the preferred embodiment, the method further comprises classifying, by the processing unit, the plurality of name graph segments into a plurality of groups such that each group of the plurality of groups is representative of a specific industrial context of a plurality of industrial contexts associated with the plurality of engineering projects. The plurality of industrial contexts comprise information associated with one or more specific details about each of the plurality of engineering projects. In one example, an industrial context of an engineering project denotes a domain of the engineering project. In such a case, examples of the industrial context include but is not limited to a chemical domain, a mechanical domain or an electronic domain. In another example, the industrial context of the engineering project denotes a specific environment in which the engineering project is implemented. In such a case, examples of the industrial context include but is not limited to a dry environment, a wet environment, and a hot environment. In yet another example, the industrial context of the engineering project denotes a specific constraint associated with the engineering project such as a constraint in power consumption, a constraint in costs, and a constraint in efficiency.

In the preferred embodiment, the method further comprises generating, by the processing unit, a plurality of alternate representations for a set of nodes in each name graph segment of each group of the plurality of groups. In one example, the plurality of alternate representations for the set of nodes in a name graph segment is generated by a plurality of steps. A first step of the plurality of steps comprises rearranging, by the processing unit, one or more nodes in the set of nodes of the name graph segment randomly to generate a new arrangement of the set of nodes in the name graph segment. A second step of the plurality of steps is to validate the new arrangement of the set of nodes by comparing the new arrangement of the set of nodes to a plurality of arrangements of nodes in the name graph. In a case where the new arrangement of the set of nodes is compatible with a portion of the name graph, then the new arrangement of the set of nodes is validated. A third step of the plurality of steps is that in a case where the new arrangement of the set of nodes is validated, then the new arrangement of the set of nodes is added to a context stack. The processing unit is configured to generate at least one alternate representation of the plurality of alternate representations of the set of nodes based on the new arrangement of the context stack. In other words, the processing unit is configured to generate the plurality of alternate representations of the set of nodes of each name graph segments of the plurality of name graph segments.

The context stack is a memory structure in which the plurality of alternate representations of the set of nodes which corresponds to each name graph segment are populated by the processing unit. After the plurality of alternate representations of a set of nodes of each name graph segment are populated in the context stack, the processing unit is configured to determine a plurality of problem statements in each of the plurality of alternate representations in the context stack. The plurality of problem statements comprises information associated with anomalies and deficiencies in each alternate representations in the plurality of alternate representations in the context stack.

The plurality of problem statements are determined by the processing unit by application of a machine learning algorithm on the plurality of alternate representation of the set of nodes of each name graph segment. The machine learning algorithm is trained by application of supervised learning on a training set comprising the plurality of engineering projects in which a plurality of anomalies are labelled. The method further comprises determining, by the processing unit, a plurality of solutions for each of the determined plurality of problem statements by application of the machine learning algorithm on the plurality of problem statements. In one example, the plurality of problem statements are determined for the plurality of alternate representations in the context stack in an ascending order. The method further comprises executing, by the processing unit, the plurality of solutions on the plurality of alternate representations in the context stack. Furthermore, one or more name graph segments are generated by the processing unit, from each alternate representation of the generated plurality of alternate representations of the set of nodes in the plurality of name graph segments. The method further comprises appending, by the processing unit, the generated one or more name graph segments into the name graph. The plurality of alternate representations of the set of nodes is indicative of knowledge which is newly generated from existing knowledge in the name graph and the plurality of name graph segments. Thus, the newly generated one or more name graph segment comprises knowledge which is absent in the plurality of engineering projects. Advantageously, by appending the generated one or more name graph segments into the name graph, the processing unit is generating knowledge which is non existent in the plurality of engineering projects. Thus, the processing unit is configured to generate insights, knowledge and connections which are new compared to knowledge already existing in the plurality of engineering projects.

In another example, the plurality of alternate representations for the set of nodes associated with each group of the plurality of groups is generated in a plurality of iterative stages. In a first iterative stage, the processing unit is configured to select a first industrial context from the plurality of industrial contexts. In a second stage, the processing unit is configured to select a specific name graph segment of the plurality of name graph segments based on the selected first industrial context. In the third stage, the processing unit is configured to load the specific name graph segment into an active section of the name graph. In the fourth stage, the processing unit is configured to iteratively generate a set of alternate representations for a set of nodes in the specific name graph segments by rearranging the set of nodes. In the fifth stage, the processing unit is configured to determine whether if all possible alternate representations, for the set of nodes, are present in the set of alternate representations. In a case where all possible alternate representations are determined to be generated, the processing unit is configured to select a second industrial context from the plurality of industrial contexts such that the second industrial context is different from the first industrial contexts. The processing unit is further configured to move the specific name graph segment from the active section of the name graph to a latent section of the name graph. The processing unit is further configured to then restart the plurality of iterative stages for the selected second industrial context.

The processing unit is configured to continue executing the plurality of iterative stages until the plurality of alternate representations for each name graph segment of the plurality of name graph segments are generated. Furthermore, the processing unit is further configured to generate one or more name graph segments based on the plurality of alternate representations of the set of nodes. Furthermore, the processing unit is configured to add the newly generated one or more name graph segments in the plurality of name graph segments. In other words, the name graph comprises information about the plurality of alternate representations of the plurality of nodes of the name graph.

In the preferred embodiment, the method further comprises selecting, by the processing unit, a first industrial context and a second industrial context from the plurality of industrial contexts. The processing unit is further configured to determine a first name graph segment which corresponds to the first industrial context and a second name graph segment which corresponds to the second industrial context. The processing unit is further configured to determine a plurality of differences between the first name graph segment and the second name graph segment. The processing unit is further configured to analyze the plurality of differences to determine a plurality of changes which has to be implemented in the first name graph segment to convert the first name graph segment to the second name graph segment. The method further comprises modifying, by the processing unit, the first name graph segment based one the determined plurality of changes to iteratively generate a plurality of intermediate name graph segments.

Each of the plurality of intermediate name graph segments denote transition stages between the first name graph segment and the second name graph segment. To generate an intermediate name graph segment of the plurality of intermediate name graph segments, the processing unit is configured to implement at least one change, from the plurality of changes, on the first name graph segment. The processing unit is further configured to tag each of the plurality of intermediate name graph segments to one of the first name graph segment or the second name graph segment. In one example, the processing unit is configured to assign the first industrial context to each of the intermediate name graph segments which are tagged to the first name graph segment. Similarly, the processing unit is configured to assign the second industrial context to each of the intermediate name graph segments which are tagged to the second name graph segment. Furthermore, the plurality of intermediate name graph segments are added to the plurality of name graph segments in the name graph. Thus, the newly generated one or more name graph segment comprises knowledge which is absent in the plurality of engineering projects. Advantageously, by adding the generated plurality of intermediate name graph segments into the name graph, the processing unit is generating knowledge which is non existent in the plurality of engineering projects. Thus, the processing unit is configured to generate insights, knowledge and connections which are new compared to knowledge already existing in the plurality of engineering projects.

In the preferred embodiment, the method further comprises generating, by the processing unit, a plurality of knowledge graph templates for the plurality of processes of the plurality of engineering projects. The plurality of knowledge graph templates are generated based on an analysis of the plurality of name graph segments, the plurality of industrial contexts, and the name graph. Each of the plurality of knowledge graph templates comprises template based information associated with a specific process in an engineering project of the plurality of engineering projects.

A knowledge graph template associated with a specific process comprises information about one or more engineering objects required to perform the specific process in a set of industrial contexts in the plurality of engineering projects. The knowledge graph template comprises information about connection schemas, hardware and software configurations, list of variants, and programming code required to implement the specific process in the set of industrial contexts in the plurality of engineering projects. The knowledge graph template is generated from at least one name graph segment associated with each industrial context of the set of industrial contexts. Thus, advantageously, a user is enabled to use the knowledge graph template to implement the specific process in any industrial context of the set of industrial contexts.

In one example, the specific process is a heating process which requires a first engineering object "a heater" and a second engineering object "a controller". In such a case, a knowledge graph template comprises information to implement the heating process in a set of industrial contexts. The set of industrial context comprises a warming water context and a boiling water context. The knowledge graph template comprises information about a first connection schema, a first variant information, and a first programming file for the first engineering object and the second engineering object in a case where the specific process is implemented in the heating water context. For example, for the warming water context, the first engineering object and the second engineering objects are configured such that a temperature of water is maintained below 100 degree Celsius. The knowledge graph template comprises information about a second connection schema, a second variant information, and a second programming file for the first engineering object and the second engineering object in a case where the specific process is implemented in the boiling water context. For example, for the boiling water context, the first engineering object and the second engineering objects are configured such that a temperature of water is increased above 100 degree Celsius.

In one example, the plurality of knowledge graph templates are generated in a plurality of iterative stages. In a first stage of the plurality of iterative stages, the processing unit is configured to select a first name graph segment from the plurality of name graph segments. The processing unit is configured to analyse the first name graph segment to determine a first process associated with the first name graph segment. In a second stage, the processing unit is configured to analyze each name graph segment in the plurality of groups of name graph segments to determine a set of name graph segments from the plurality of groups. The set of name graph segments is determined from each of the plurality of groups such that each name graph segment of the set of name graph segments is associated with a second process which is similar to the first process. In one example, a similarity between the first process and the second process is determined based on an analysis an arrangement of nodes in the first name graph segment and the set of name graph segments. In a case where the arrangement of nodes are similar in the first name graph and the set of name graph segments, the first process corresponding to the first name graph segment is similar to the second process corresponding to the set of name graph segments.

In a third stage of the plurality of iterative stages, the processing unit is configured to analyze the first name graph segment and the set of name graph segments to determine a first set of nodes which are common in the first name graph segment and the set of name graph segments. The processing unit is further configured to determine a second set of nodes from the set of name graph segments. The second set of nodes denote a plurality of differences between the first name graph segments and a second name graph segment in the set of name graph segments.

In the fourth stage of the plurality of iterative stages, the processing unit is configured to generate the knowledge graph template for the first process by analysis of the first name graph segment and the set of name graph segments. The knowledge graph template comprises information associated with the first set of nodes and the second set of nodes. Thus, the knowledge graph template comprises information required to implement in the first process in the set of industrial contexts. Thus, the processing unit is configured to generate the plurality of knowledge graph templates for the plurality of name graph segments. The plurality of knowledge graph templates are stored in a knowledge graph repository.

In the preferred embodiment, the method further comprises receiving, by the processing unit, a process and instrumentation diagram associated with an engineering project. The process and instrumentation diagram comprises is a pictorial representation of a plurality of processes which are to be implemented in the engineering project. In one example, the Process and Instrumentation Diagram, shows how a plurality of process equipment is connected in the engineering project. Furthermore, the process and instrumentation diagram comprises information associated with flow directions, safety and control systems, pressure ratings and other key piping and instrument details of the engineering project.

In one example, the process and instrumentation diagram further comprises information associated with a domain in which the engineering project is implemented. The processing unit is configured to receive the process and instrumentation diagram via an input device such as a camera or a scanner. In one example, the process and instrumentation diagram is an image file such as JPEG, or a bitmap image. In another example, the received process and instrumentation diagram is a portable document format.

In one example, the process and instrumentation diagram further comprises information associated with a plurality of engineering objects in the engineering project. Furthermore, the process and instrumentation diagram comprises information associated with interconnection between the plurality of engineering objects. In yet another example, the process and instrumentation diagram comprises information associated with one or more sensors which are used in the engineering project. Examples of the one or more sensors includes but is not limited to a temperature sensor, a pressure sensor, and a vibration sensor.

In the preferred embodiment, the method further comprises applying, by the processing unit, an image processing algorithm on the received process and instrumentation diagram to determine the plurality of tiles in the process and instrumentation diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams.

The plurality of labelled process and instrumentation diagram comprises pictorial representations of a set of processes. The pictorial representations are labelled with a plurality of labels comprising information associated with a name of a plurality of components and also meaning of a plurality of symbols used in the plurality of process and instrumentation diagrams. Examples of the image processing algorithm includes but is not limited to a single shot detector algorithm, a spatial pyramid pooling algorithm, a you look only once algorithm, and a histogram of oriented gradients algorithm.

In the preferred embodiment, the method comprises determining, by the processing unit, the plurality of tiles in the process and instrumentation diagram. The plurality of tiles comprises the plurality of symbols in the process and instrumentation diagram. The plurality of symbols in the process and instrumentation diagram includes a first set of symbols which are indicative of a plurality of components of the engineering project. The plurality of components include one or more engineering objects and one or more connection lines which define interconnections between the one or more engineering objects. The plurality of symbols further comprises a second set of symbols which are indicative of flow directions, safety and control systems, pressure ratings and other key piping and instrument details of the engineering project. In one example, each of the plurality of tiles represent one or more engineering objects such as motors, valves and pipes in the engineering project.

In the preferred embodiment, the method further comprises combining, by the processing unit, two or more tiles of the plurality of tiles to generate a plurality of modules. Each module of the plurality of modules comprises information associated with a specific functional block of at least one process of the plurality of processes in the process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit is configured to identify each module of the plurality of modules based on an analysis of the process and instrumentation diagram.

In the preferred embodiment, the method further comprises combining, by the processing unit, two or mode modules of the plurality of modules to determine the set of processes of the engineering project. In one example, the process and instrumentation diagram comprises information associated with each process in the plurality of processes in the engineering project. In such a case, the processing unit is configured to combine the two or more modules based on an analysis of the information associated with each process in the plurality of processes.

In another example, the processing unit is configured to determine a plurality of interconnections between the plurality of processes by an analysis of the process and instrumentation diagram. In one example, the plurality of interconnections between the plurality of processes are denoted as interconnections between the plurality of engineering objects in the process and instrumentation diagram.

In the preferred embodiment, the method further comprises determining, by the processing unit, a set of knowledge graph templates which correspond to the determined plurality of processes in the engineering project. The set of knowledge graph templates are determined from the plurality of knowledge graph templates in the knowledge graph repository. Each knowledge graph of the determined set of knowledge graph templates corresponds to at least one process in the determined plurality of processes in the engineering project. The processing unit is further configured to combine the determined set of knowledge graph templates to generate a process knowledge graph corresponding to the plurality of processes of the engineering project.

The set of knowledge graph templates comprises information associated with the plurality of engineering objects which are required to perform the plurality of processes in the engineering object. The information associated with the plurality of engineering objects comprises information about connection schemas, hardware and software configurations, list of variants, and programming code required to implement the plurality of processes in a plurality of industrial contexts.

In the preferred embodiment, the method comprising receiving, by the processing unit, an industrial context for the engineering project. In one example, the processing unit receives the industrial context for the engineering project via an input device. In another example, the industrial context of the engineering project is described in the process and instrumentation diagram. In such a case the processing unit is configured to extract the industrial context of the engineering project from the process and instrumentation diagram based on an analysis of the process and instrumentation diagram.

In the preferred embodiment, the method comprises extracting from the determined set of knowledge graph templates, by the processing unit, information associated with the extracted industrial context. The information associated with the industrial context comprises information associated with one or more engineering objects required to implement the plurality of processes in the extracted industrial context. Information associated with the one or more engineering object comprises an optimum hardware and software configuration and an optimum variant of the one or more engineering object to perform the plurality of processes. The information further comprises information associated with a set of programming blocks from a plurality of programming blocks in the plurality of knowledge graph templates. Each of the set of programming blocks are comprises program code which is to be executed to control the one or more engineering blocks to implement at least one process of the plurality of processes of the engineering project.

In the preferred embodiment, the method comprises generating, by the processing unit, an engineering program for the engineering project from the extracted information from the determined set of knowledge graph templates. In one example, the processing unit is configured to combine the determined set of programming blocks to generate an engineering program comprising sourcecode to control the one or more engineering objects in the engineering projects. In such a case, the engineering project comprises the engineering program and the process and instrumentation diagram. In another example, the engineering project comprises information associated one or more optimum variants of the one or more engineering objects for implementing the plurality of processes in the extracted industrial context. In yet another example, the engineering project comprises information associated with optimum hardware and software configuration for the one or more engineering for implementing the plurality of processes for the extracted industrial context.

In one example the generated engineering program is a process oriented program such as an International Electrotechnical Commission Programming Language (IECPL) program. In such a case, the processing unit is configured to receive a plurality of modifications for the generated engineering project. The plurality of modifications is received via an input device such as a human machine interface panel or a personal computer. The processing unit is further configured to execute the plurality of modifications into the generated engineering project to modify the engineering program in the engineering project.

In the preferred embodiment, the method comprises receiving, by the processing unit, a request from the user to convert the engineering project into a hybrid engineering project. The hybrid engineering project comprises a plurality of object oriented program files and a plurality of IECPL program files. In one example, the request is received from the user via the input device. In one example, the request is at least one of a verbal request, a gesture based request or a text based request.

In the preferred embodiment, the method further comprises generating, by the processing unit, a program name graph based on an analysis of the modified process oriented program. The program name graph comprises a plurality of nodes which comprises information associated with a plurality of commands, a plurality of subroutines, a plurality of variables present in the modified process oriented program. Furthermore, the program name graph comprises information associated with a plurality of interconnections between the plurality of commands, the plurality of subroutines, and the plurality of variables.

In the preferred embodiment, the method comprises comparing, by the processing unit, one or more portions of the program name graph with the plurality of knowledge graph templates in the knowledge graph repository. In a case where the one or more portions of the program name graph matches with one or more knowledge graph templates, the processing unit is configured to identify the one or more portions of the program name graph as a class entity graph portion of the program name graph. The processing unit is further configured to identify a first portion of the process oriented program, as a class entity. The identified first portion of the process oriented program corresponds to the class entity portion of the program name graph. The class entity corresponds to at least one engineering object in the engineering project.

The method further comprises, determining, by the processing unit, a plurality of dataflow and control flow interrelationships between a set of engineering objects in the engineering project, based on an analysis of the process name graph. The method further comprises converting, by the processing unit, the determined plurality of interconnections into utility entities based on an analysis of the determined plurality of dataflow and control flow relationships between the set of engineering object. The method further comprising, generating, by the processing unit, the hybrid engineering project by combining the generated class entities with the determined untility entities.

The object of the present invention is also achieved by an engineering system for automatic configuration of engineering objects. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of automatic generation of engineering program for an engineering project, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4A-E: is a process flowchart illustrating an exemplary method of automatically generating an engineering program for an engineering project, according to an embodiment of the present invention;
- FIG 5A-D: is a flowchart representation of an exemplary methof of generating a plurality of knowledge templates, according to an embodiment of the present invention;
- FIG 6: is a schematic representation of an exemplary process of generating a plurality of name graph segments from a name graph, according to an embodiment of the present invention; and
- FIG 7: is a schematic representation of an exemplary process of determining a plurality of processes in a process and instrumentation diagram, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

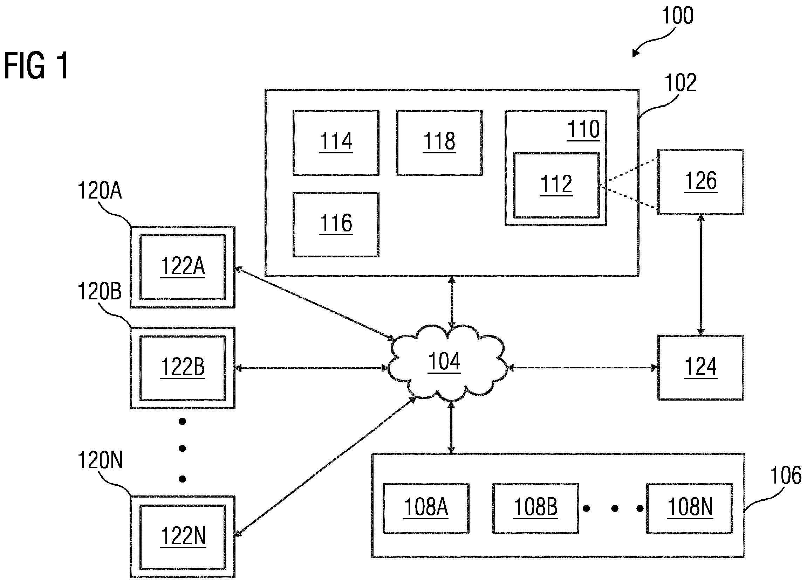

FIG 1 is a block diagram of an industrial environment 100 capable of automatic generation of an engineering program for an engineering project 106, according to an embodiment of the present invention. In FIG 1, the industrial environment 100 includes an engineering system 102, the engineering project 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a technical installation via the network 104 (such as Local Area Network (LAN), Wide Area Network (WAN), Wi-Fi, Internet, any short range or wide range communication). The engineering system 102 is also connected to the one or more client devices 120A-N via the network 104. The technical installation functions smoothly by use of the engineering project 106.

The engineering project 106 comprises a set of engineering objects 108A-N. Examples of the set of engineering objects 108A-N may include, for example, a programmable logic controller, one or more field devices, or any other automation devices. Examples of the one or more field devices includes but is not limited to, motors, rotors, mixers, furnaces, heaters, refrigerators, control valves, pumps, and actuators.

The set of engineering objects 108A-N are operated by use of the plurality of virtual engineering objects which are executed in a processing unit of an industrial control system. The engineering project 106 is configured to control the set of engineering objects 108A-N to achieve a specific objective in the technical installation. Examples of the technical installation includes, a power plant, a manufacturing plant, and a water treatment plant.

Each engineering object of the set of engineering objects 108A-N has a plurality of properties which are described in a plurality of documents present inside the engineering project 106. The plurality of properties includes but is not limited to information associated with compatibility of each engineering objects with other engineering objects of the set of engineering objects 108A-N, temperature rating, pressure rating, a function in the engineering project 106, configuration settings associated with the set of engineering objects 108A-N and residual life of the set of engineering objects 108A-N. The plurality of documents comprises process related documents like process operation description document, process flowchart, and process control philosophy, process and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

In one example, the plurality of documents comprises a list of measurements taken by a plurality of field sensors from the set of engineering objects 108A-N. In such a case, the plurality of dependencies comprises information associated with interelationships between a first property of the specific engineering object and a measurement taken by a specific field sensor of the plurality of field sensors.

In one example, the specific field sensor is a temperature sensor which detects a temperature of the specific engineering object. Furthermore, the voltage rating of the specific engineering object is dependent on the temperature detected by the temperature sensor. In such a case, the plurality of documents comprise information associated with variation of the voltage rating based on the detected temperature.

The engineering system 102 is connected to the set of engineering objects 108A-N in the engineering project 106 via the network 104. The set of engineering objects 108A-N may be connected to each other or several other components (not shown in FIG 1) via physical connections. The physical connections may be through wiring between the set of engineering objects 108A-N. Alternatively, the set of engineering objects 108A-N is connected via non-physical connections (such as Internet of Things (IOT)) and 5G networks. Although, FIG 1 illustrates the engineering system 102 connected to one engineering project 106, one skilled in the art can envision that the engineering system 102 can be connected to several engineering projects 106 located at different geographical locations via the network 104.

The one or more client devices 120A-N may be a desktop computer, laptop computer, tablet, smart phone and the like. Each of the one or more client devices 120A-N is provided with an 122A-N for generating and/or editing a plurality of engineering programs. For example, the one or more client devices 120A-N can access the engineering system 102 for automatically generating engineering programs. The one or more client devices 120A-N can access cloud applications (such as providing performance visualization of the set of engineering objects 108A-N via a web browser). Throughout the specification, the terms "client device" and "user device" are used interchangeably.

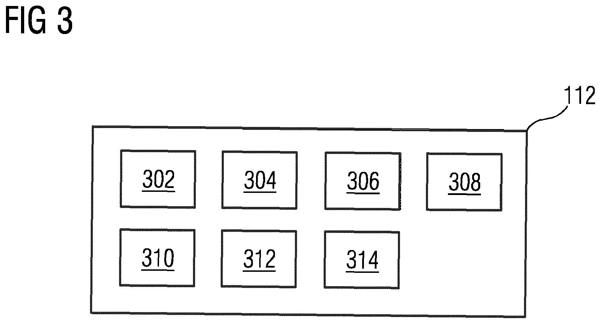

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a technical installation comprising the set of engineering objects 108AN. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the technical installation, and the one or more client device(s) 120A-N. The interface (such as cloud interface) (not shown in FIG 1) may allow the engineers at the one or more client device(s) 120A-N to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise an automation module 112 configured for generating engineering programs. The automation module 112 further comprises a knowledge repository 126 comprising at least one name graph. Details of the automation module 112 is explained in FIG. 3.

The industrial environment 100 further comprises a project repository 124 comprising information associated with a plurality of engineering projects. The plurality of engineering projects comprises information about a plurality of engineering objects configured to implement a plurality of industrial processes in the technical installation. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of industrial processes include, but is not limited to a heating process, a cooling process and a melting process. In one example, the project repository 124 is a database server which is connected to the engineering system 102 via the network 104.

The plurality of engineering projects comprises engineering projects associated with a plurality of domains. Examples of the plurality of domains includes, but is not limited to a chemical domain, a mechanical domain, a manufacturing domain, and an energy domain. Furthermore, each engineering project of the plurality of engineering projects comprises information associated with a plurality of variants of the plurality of engineering objects. Each variant of the plurality of variants differ from each other in voltage rating, power rating, year of manufacturing, vibration resistance, and water resistance.

Each of the plurality of engineering projects comprises at least one process and instrumentation diagram and a set of programming blocks. The process and instrumentation diagram comprises information associated with interconnection between the plurality of engineering objects in each engineering project of the plurality of engineering projects. The set of prgramming blocks comprises programming code which is executed by a controller device to control operations of the plurality of engineering objects.

In one example, the set of programming blocks are written in a hybrid format comprising a combination of an object-oriented programming format and a process-oriented programming format. In one example, the set of programming blocks comprises a plurality of classes. Each class of the plurality of classes comprises programming logic associated with a specific engineering object of the plurality of engineering objects in the plurality of engineering projects. The plurality of programming blocks further comprises one or more programming blocks associated with each domain of a plurality of domains of the plurality of engineering projects.

The database 118 stores the information relating to the technical installation and the one or more client device(s) 120AN. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the set of engineering objects 108A-N, test results, simulation results, status messages, one or more simulation instances, graphical programs, program logics, program logic patterns, product manuals of the set of engineering objects 108A-N and engineering object properties, one or more engineering object blocks, relationship information between the engineering objects, requirements, program update messages and the like.

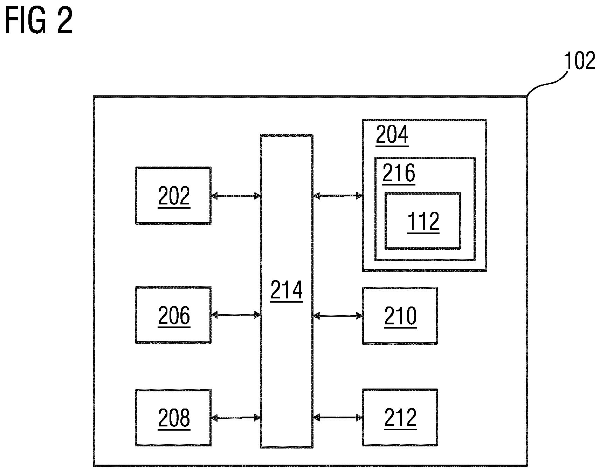

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

When executed by the processing unit 202, the automation module 112 causes the processing unit 202 to receive the plurality of engineering projects.

The automation module 112 further causes the processing unit 202 to analyze the plurality of engineering projects based on an application of a natural language processing algorithm on each engineering project of the plurality of engineering projects. In one example, the natural language processing algorithm is at least one of a named entity recognition algorithm, a text summarization algorithm, and a tokenization algorithm. The natural language processing algorithm is configured to extract a plurality of data items from the analyzed plurality of engineering projects. The plurality of data items comprises information associated with each engineering object of the plurality of engineering objects in each engineering project of the plurality of engineering projects. Examples of the information associated with each engineering object comprises a name, a voltage rating, a power rating, a purpose, a function, a specification, a manufacturer details, and a maintenance details associated with the plurality of engineering objects. For example, in a case where the plurality of engineering projects comprises a document which comprises a first statement "voltage rating of motor is 300 volts" and a second statement "a first object is a motor", then the extracted plurality of data items comprises a first data item "first object", a second data item "motor", a third data item "300 volts" and a fourth data item "voltage rating".

In one example, the plurality of engineering projects comprises at least one process and instrumentation diagram comprising information associated with interconnections between a first object, a second object and a third object. In such a case, the plurality of data items comprises the information about interconnections between the first, the second, and the third objects. Furthermore, the plurality of data items comprises code snippets, object classes, programming logic, subroutines, variables, and code libraries comprised in the set of programming blocks of each engineering project of the plurality of engineering projects.

Furthermore, in a case where the plurality of engineering objects comprises a control philosophy document, the extracted plurality of data items comprises information associated with operational steps associated with the plurality of engineering objects in the plurality of engineering projects. Furthermore, in such a case, the plurality of data items comprises information associated with one or more subsystems, equipment, components, control targets and other variables associated with the plurality of engineering projects.

In another example, the plurality of engineering projects comprises information associated with hardware and software configuration details of each of the plurality of engineering objects of the plurality of engineering projects. In such a case, the plurality of data items comprises information about the hardware configuration such as a voltage rating, a power rating, a purpose, a function, a specification, a manufacturer details, and a maintenance details of each engineering object of the plurality of engineering objects.

Furthermore, the plurality of data items comprises information associated with the software configuration such as details about a software platform, an operating system, supported network protocols and Internet protocol address of each engineering object of the plurality of engineering objects.

The automation module 112 further causes the processing unit 202 to analyze the plurality of data items and the plurality of engineering projects by the application of the natural language processing algorithm on the plurality of data items and the plurality of engineering projects.

The automation module 112 further causes the processing unit 202 to determine a plurality of interrelationships between the plurality of data items and the plurality of engineering objects based on the analysis. In one example, the plurality of engineering projects comprises a document comprising a first statement "voltage rating of motor is 300 volts" and a second statement "a first object is a motor" . In such a case, the processing unit determines a first interrelationship that the first data item (voltage rating) is linked to the second data item (300 volts). Furthermore, the processing unit determines a second interrelationship that the second data item (motor) is linked to the third data item (300 volts).

In other words, the processing unit 202 is configured to determine information associated with the plurality of interrelationships between one or more data items of the plurality of data items. Further, the processing unit 202 is configured to determine the plurality of interrelationships between the plurality of data items and the plurality of engineering objects of the plurality of engineering projects based on the analysis.

The automation module 112 further causes the processing unit 202 to generate a name graph based on the analysis of the plurality of data items and the plurality of engineering projects. In one example, the name graph is generated by the processing unit 202, by analysis of the determined plurality of data items and the determined plurality of interrelationships. The name graph comprises a plurality of nodes. Each node of the plurality of nodes comprises information associated with a specific engineering object of the plurality of engineering objects of the plurality of engineering projects.

For example, the plurality of nodes comprises a first node comprising information about the first data item "first object", a second node comprising information about the second data item "motor", a third node comprising information about the third data item "300 volts" and a fourth node comprising information about the fourth data item "voltage rating". Furthermore, the name graph comprises a plurality of links between the plurality of nodes to represent the plurality of interrelationships between the plurality of data items.

The plurality of nodes further comprises information associated with the set of programming blocks in each engineering object of the plurality of engineering objects. Examples of the information associated with the set of programming blocks include but is not limited to names of functions, data flow in each of the set of programming blocks, classes in set of programming blocks, variable names, and data types in the set of programming blocks. Information comprised in the plurality of nodes further comprises information associated with hierarchical dependencies between classes, functions, and subroutines within the set of programming blocks. The name graph further comprises information associated with interrelationships between each of the set of programming blocks and each engineering object of the plurality of engineering objects of the plurality of engineering projects. Furthermore, the name graph further comprises information associated with interrelationships between each of the set of programming blocks and one or more industrial contexts of each engineering object of the plurality of engineering objects of the plurality of engineering projects.

The one or more industrial contexts comprises information associated with a domain of each of the plurality of engineering projects. The one or more contexts further comprises information associated with a specific functionality of each engineering object of the plurality of engineering objects of the plurality of engineering projects. For example, in a case where a specific engineering object is a motor, the one or more industrial contexts comprises information associated with a function of the motor in each engineering project of the plurality of engineering projects. In one example, the motor is used in a compressor module of a refrigeration system. In such a case the one or more industrial contexts of the specific engineering object comprises information that the motor is functioning within a context of a compressor. In another example, the motor is used as a driver for a conveyor belt. In such a case the one or more industrial context of the specific engineering object comprises information that the motor is functioning within a context of a compressor.

In the preferred embodiment, the generated name graph has a plurality of dimensions. Each dimension of the plurality of dimensions represents a specific aspect of each engineering project of the plurality of engineering projects. In one example, a first dimension of the plurality of dimensions comprises one or more nodes associated with information associated with a programming code in the set of programming blocks of each of the plurality of engineering projects. The information associated with the programming code comprises information associated with a programming language, list of hierarchies and dependencies, classes, variables, and code snippets in the programming code. Furthermore, a second dimension of the plurality of dimensions comprises one or more nodes comprising information associated with a user interface in each engineering project of the plurality of engineering projects. Furthermore, a third dimension comprises information about the one or more industrial contexts of each engineering object of the plurality of engineering objects. The third dimension further comprises information associated with the plurality of variants of each engineering object of the plurality of engineering objects.

Advantageously, the name graph comprises information associated with interconnections, the plurality of variants, hardware configurations, software configurations, engineering programs, the plurality of industrial contexts, the plurality of domains, and the plurality of functionalities associated with each engineering object of the plurality of engineering objects in the plurality of engineering projects. Furthermore, the name graph comprises information associated with interconnections and dependencies between the plurality of engineering objects and the plurality of variants, the hardware configurations, the software configurations, the engineering programs, the plurality of industrial contexts, the plurality of domains, and the plurality of functionalities of the plurality of engineering objects. Thus, advantageously, the processing unit 202 is configured to extract knowledge from the plurality of engineering objects of the plurality of engineering project.

The name graph further comprises information associated with variations in each variant of the plurality of variants of each engineering object of the plurality of engineering objects. Furthermore, the name graph comprises information associated with a plurality of symbols and notations in one or more process and instrumentation diagrams in the plurality of engineering projects. The plurality of symbols and notations denote control flow and data flow between each engineering object of the plurality of engineering objects.

In one example, the name graph comprises information associated with a specific engineering object, which is a motor. In such a case, the name graph comprises a first set of nodes comprising information associated with a plurality of variants of the motor. Furthermore, a second set of nodes in the name graph comprises information associated with a process and instrumentation diagram icon/template associated with the motor. Furthermore, a third set of nodes in the name graph comprises information associated with a usage template of the motor. The usage template indicates information associated with the motor such as a voltage rating, a power rating, a current rating, a speed, and an input-output port of the motor.

The automation module 112 further causes the processing unit 202 to analyzing the name graph to determine a plurality of name graph segments in the name graph. Each of the plurality of name graph segments comprises one or more nodes comprising information about a specific process in a plurality of processes implemented in the plurality of engineering projects. Examples of the specific process comprises but is not limited to a heating process, a cooling process, a transporting process, a chemical process and a mechanical process. In such a case, the plurality of name graph segments are determined based on an analysis of information in the one or more nodes. In such a case, each name graph segment of the plurality of name graph segments comprises information associated with a specific process of the plurality of processes implemented in the plurality of engineering projects.

Each process of the plurality of processes is performed by a combination of two or more engineering objects in the plurality of engineering objects. For example, a process such as a transportation process is performed by a combination of engineering objects comprising a first engineering object such as a conveyor belt in conjunction with a second engineering object such as a autonomous guided vehicle, and a third engineering object such as a pick and place robot. In such a case, each node in a name graph segment associated with the transportation process comprises information associated with at least one of the first, the second, and the third engineering object.

Each node of the plurality of name graph segments comprises information associated with a specific functionality of a specific engineering object of the combination of the tow or more engineering objects. The specific functionality associated with a specific engineering object includes at least one function of a plurality of functions of the specific engineering object. In one example, the specific engineering object is a motor which is used for the plurality of functionalities such as transportation, compression of air, drilling of metals, and milling of powder. In a case where the specific engineering object is used for drilling of metals, then the specific functionality of the specific engineering object is to drill metals.

In another example, the plurality of name graph segments are determined based on an analysis of an arrangement of the plurality of nodes of the name graph. For example, the processing unit 202 is configured to receive from a database, a plurality of name graph structures which are stored in the database. Each of the plurality of name graph structures has a structure in accordance with which a set of nodes of the name graph structure are arranged. The plurality of name graph structures are stored in a database or a knowledge graph repository.

Each name graph structure of the plurality of name graph structures comprises a knowledge graph which indicates a specific process of a plurality of industrial processes. The knowledge graph associated with the specific process comprises information associated with one or more engineering objects which are configured to perform the specific process in a technical installation.

In such a case, the processing unit 202 is configured to compare a structure of a portion of the name graph with a structure of each name graph structure of the plurality of name graph structures. The structure of the portion of the name graph is indicative of an arrangement of two or more nodes in the portion of the name graph and interconnections between the two or more nodes. Thus, the processing unit 202 is configured to determine the specific process by matching the structure with at least one of the plurality of name graph structures.

In another example, the plurality of name graph segments are determined by application of a neural network on the name graph. The neural network is trained on a training data set comprising information associated with the plurality of industrial processes and the plurality of name graph structures.

In another example, the plurality of nodes comprises information associated with an input parameter and an output parameter associated with each of the plurality of engineering objects of the plurality of engineering projects. An input parameter of an engineering object is indicative of information associated with a data type of the input parameter, a size of the input parameter, and a number of input parameters which are received by the engineering object. An output parameter of the engineering object is indicative of information associated with a data type of the output parameter, a size of the output parameter, and a number of output parameters which are output by the engineering object. In such a case, the processing unit 202 is configured to extract information associated with the input parameter and the output parameter from the plurality of nodes. Furthermore, the processing unit 202, is configured to receive information associated with input parameters and output parameters of a plurality of industrial devices. Examples of the plurality of industrial devices include a programmable logic controller, a valve, a motor and a heater. The processing unit 202 is further configured to compare the input parameters and the output parameters extracted from the plurality of nodes, to the received input and output parameters. The processing unit 202 is further configured to determine the plurality of name graph segments based on the comparison.

The automation module 112 further causes the processing unit 202 to analyze the plurality of name graph segments to determine a logic structure of each name graph segment of the plurality of name graph segments. A logic structure of a name graph segment is indicative of an arrangement of two or more nodes in the name graph segment. In one example, the processing unit 202 is configured to determine the logic structure of each name graph segment of the plurality of name graph segment by application of a pattern recognition algorithm on a set of nodes in each name graph segment of the plurality of name graph segments. The processing unit 202 is further configured to compare the logic structure of each name graph segment of the plurality of name graph segments with each other.

The automation module 112 further causes the processing unit 202 to determine two or more name graph segments from the plurality of name graph segments based on the comparison, such that the determined two or more name graph segments have similar logic structures. In one example, the two or more name graph segments are determined by the processing unit 202 based on a determination that the arrangement of the two or more nodes in each name graph segment of the two or more name graph segments, are similar to each other. In one example, the processing unit 202 is configured to tag the two or more name graph segments together. In other words, the processing unit 202 is configured to generate a plurality of tags for the plurality of name graph segments. Each tag of the plurality of tags indicate two or more nodes, of the plurality of name graph segments, which have similar logic structures.

The automation module 112 further causes the processing unit 202 to determine a set of name graph segments which has a plurality of logic structures which are repeated throughout the name graph. In one example, the set of name graph segments are determined by application of a machine learning algorithm on the name graph. The machine learning algorithm is one of a supervised learning algorithm and an unsupervised learning algorithm. In one example, the machine learning algorithm is a pattern recognition algorithm which is configured to determine a plurality of patterns in an arrangement of the plurality of nodes in the name graph. In such a case, the machine learning algorithm is configured to determine that one or more patterns from the plurality of patterns, are repeated throughout the name graph. The set of name graph segments are determined by the processing unit 202 based on an analysis of the one or more patterns which are determined to be repeated throughout the name graph.

One or more nodes of each of the plurality of name graph segments further comprises information associated with connection of one or more engineering objects of the plurality of engineering objects with other engineering objects of the plurality of engineering objects of the plurality of engineering projects. In one example, the one or more engineering object is connected with other engineering objects via at least one of a mechanical connection, a wired communication connection or a wireless communication connection. The information associated with the connection is extracted by the processing unit 202 from a plurality of process and instrumentation diagrams in the plurality of engineering projects. The one or more nodes further comprises information associated with one or more connection diagrams, one or more user ratings, voltage ratings, power ratings, current ratings, information associated with operating systems, communication protocols, and a set of programming blocks associated with the one or more engineering objects of the plurality of engineering objects in the plurality of engineering projects. Thus, in other words, a name graph segment associated with a specific process, comprises information associated with the one or more connection diagrams, the one or more user ratings, the voltage ratings, the power ratings, current ratings, the information associated with operating systems, the communication protocols, and the set of programming blocks associated with a set of engineering objects 108A-N which are implemented to execute the specific process in at least one of the plurality of engineering projects.

The automation module 112 further causes the processing unit 202 to analyze each name graph segment of the plurality of name graph segments to determine a plurality of parameters associated with the respective name graph segment. The plurality of parameters associated with a name graph segment comprises information indicative of a specific industrial process associated with the name graph segment. In one example, the plurality of parameters associated with a name graph segment comprises information associated with usage references of each of the one or more engineering objects in the plurality of engineering projects. The information associated with the usage references of an engineering object indicates a number and type of instances in which the one or more engineering objects are used in at least one engineering project of the plurality of engineering projects, to execute the specific process in the plurality of engineering projects.

The information associated with the usage references of the one or more engineering object further comprises information associated with a variant type, a version number, a manufacturer details, a model number, and a programming block associated with a usage of the one or more engineering objects in at least one engineering project of the plurality of engineering projects. The plurality of parameters associated with each name graph segment of the plurality of name graph segments further comprises information associated with one or more links of the name graph segment to other name graph segments of the plurality of name graph segments. The plurality of parameters further comprises a list of possible connections of the one or more engineering objects to other engineering objects of the plurality of engineering objects of the plurality of engineering projects.

In one example, the plurality of engineering projects comprises information associated with an optimum set of operational values, an optimum hardware configuration, an optimum software configuration, and a system requirements of each engineering object of the plurality of engineering objects. In such a scenario, information associated with the optimum set of operational values, the optimum hardware configuration, the optimum software configuration, and the system requirements are present in the name graph and the plurality of name graph segments. Thus, the plurality of parameters determined from each name graph segment, comprises the optimum set of operational values, the optimum hardware configuration, the optimum software configuration, and the system requirements associated with the one or more engineering object associated with the name graph segment. It is noted that each name graph segment comprises information associated with a specific process of the plurality of processes. Thus advantageously, each name graph segment comprises the optimum set of operational values, the optimum hardware configuration, the optimum software configuration, and the system requirements associated with the one or more engineering object used to implement the specific process in the plurality of engineering projects.

The automation module 112 further causes the processing unit 202 to classify the plurality of name graph segments into a plurality of groups such that each group of the plurality of groups is representative of a specific industrial context of a plurality of industrial contexts associated with the plurality of engineering projects. The plurality of industrial contexts comprise information associated with one or more specific details about each of the plurality of engineering projects. In one example, an industrial context of an engineering project denotes a domain of the engineering project. In such a case, examples of the industrial context include but is not limited to a chemical domain, a mechanical domain or an electronic domain. In another example, the industrial context of the engineering project 106 denotes a specific environment in which the engineering project 106 is implemented. In such a case, examples of the industrial context include but is not limited to a dry environment, a wet environment, and a hot environment. In yet another example, the industrial context of the engineering project 106 denotes a specific constraint associated with the engineering project 106 such as a constraint in power consumption, a constraint in costs, and a constraint in efficiency.

The automation module 112 further causes the processing unit 202 to determine a plurality of alternate representations for a set of nodes in each name graph segment of each group of the plurality of groups. In one example, the plurality of alternate representations for the set of nodes in a name graph segment is generated by a plurality of steps. A first step of the plurality of steps comprises rearranging, by the processing unit 202, one or more nodes in the set of nodes of the name graph segment randomly to generate a new arrangement of the set of nodes in the name graph segment. A second step of the plurality of steps is to validate the new arrangement of the set of nodes by comparing the new arrangement of the set of nodes to a plurality of arrangements of nodes in the name graph. In a case where the new arrangement of the set of nodes is compatible with a portion of the name graph, then the new arrangement of the set of nodes is validated. A third step of the plurality of steps is that in a case where the new arrangement of the set of nodes is validated, then the new arrangement of the set of nodes is added to a context stack. The processing unit 202 is configured to generate at least one alternate representation of the plurality of alternate representations of the set of nodes based on the new arrangement of the context stack. In other words, the processing unit 202 is configured to generate the plurality of alternate representations of the set of nodes of each name graph segments of the plurality of name graph segments.

The context stack is a memory structure in which the plurality of alternate representations of the set of nodes which corresponds to each name graph segment are populated by the processing unit 202. After the plurality of alternate representations of a set of nodes of each name graph segment are populated in the context stack, the processing unit 202 is configured to determine a plurality of problem statements in each of the plurality of alternate representations in the context stack. The plurality of problem statements comprises information associated with anomalies and deficiencies in each alternate representations in the plurality of alternate representations in the context stack.

The plurality of problem statements are determined by the processing unitv 202 by application of a machine learning algorithm on the plurality of alternate representation of the set of nodes of each name graph segment. The machine learning algorithm is trained by application of supervised learning on a training set comprising the plurality of engineering projects in which a plurality of anomalies are labelled. The automation module 112 further causes the processing unit 202 to determine a plurality of solutions for each of the determined plurality of problem statements by application of the machine learning algorithm on the plurality of problem statements. In one example, the plurality of problem statements are determined for the plurality of alternate representations in the context stack in an ascending order. The automation module 112 further causes the processing unit 202 to execute the plurality of solutions on the plurality of alternate representations in the context stack. Furthermore, one or more name graph segments are generated by the processing unit 202, from each alternate representation of the generated plurality of alternate representations of the set of nodes in the plurality of name graph segments. The automation module 112 further causes the processing unit 202 to append the generated one or more name graph segments into the name graph. The plurality of alternate representations of the set of nodes is indicative of knowledge which is newly generated from existing knowledge in the name graph and the plurality of name graph segments. Thus, the newly generated one or more name graph segment comprises knowledge which is absent in the plurality of engineering projects. Advantageously, by appending the generated one or more name graph segments into the name graph, the processing unit 202 is generating knowledge which is non existent in the plurality of engineering projects. Thus, the processing unit 202 is configured to generate insights, knowledge and connections which are new compared to knowledge already existing in the plurality of engineering projects.

In another example, the plurality of alternate representations for the set of nodes associated with each group of the plurality of groups is generated in a plurality of iterative stages. In a first iterative stage, the processing unit 202 is configured to select a first industrial context from the plurality of industrial contexts. In a second stage, the processing unit 202 is configured to select a specific name graph segment of the plurality of name graph segments based on the selected first industrial context. In the third stage, the processing unit 202 is configured to load the specific name graph segment into an active section of the name graph. In the fourth stage, the processing unit 202 is configured to iteratively generate a set of alternate representations for a set of nodes in the specific name graph segments by rearranging the set of nodes. In the fifth stage, the processing unit 202 is configured to determine whether if all possible alternate representations, for the set of nodes, are present in the set of alternate representations. In a case where all possible alternate representations are determined to be generated, the processing unit 202 is configured to select a second industrial context from the plurality of industrial contexts such that the second industrial context is different from the first industrial contexts. The processing unit 202 is further configured to move the specific name graph segment from the active section of the name graph to a latent section of the name graph. The processing unit 202 is further configured to then restart the plurality of iterative stages for the selected second industrial context.

The processing unit 202 is configured to continue executing the plurality of iterative stages until the plurality of alternate representations for each name graph segment of the plurality of name graph segments are generated. Furthermore, the processing unit 202 is further configured to generate one or more name graph segments based on the plurality of alternate representations of the set of nodes. Furthermore, the processing unit 202 is configured to add the newly generated one or more name graph segments in the plurality of name graph segments. In other words, the name graph comprises information about the plurality of alternate representations of the plurality of nodes of the name graph.

The automation module 112 further causes the processing unit 202 to select a first industrial context and a second industrial context from the plurality of industrial contexts. The processing unit 202 is further configured to determine a first name graph segment which corresponds to the first industrial context and a second name graph segment which corresponds to the second industrial context. The processing unit 202 is further configured to determine a plurality of differences between the first name graph segment and the second name graph segment. The processing unit 202 is further configured to analyze the plurality of differences to determine a plurality of changes which has to be implemented in the first name graph segment to convert the first name graph segment to the second name graph segment. The automation module 112 further causes the processing unit 202 to modify the first name graph segment based one the determined plurality of changes to iteratively generate a plurality of intermediate name graph segments.

Each of the plurality of intermediate name graph segments denote transition stages between the first name graph segment and the second name graph segment. To generate an intermediate name graph segment of the plurality of intermediate name graph segments, the processing unit 202 is configured to implement at least one change, from the plurality of changes, on the first name graph segment. The processing unit 202 is further configured to tag each of the plurality of intermediate name graph segments to one of the first name graph segment or the second name graph segment. In one example, the processing unit 202 is configured to assign the first industrial context to each of the intermediate name graph segments which are tagged to the first name graph segment. Similarly, the processing unit 202 is configured to assign the second industrial context to each of the intermediate name graph segments which are tagged to the second name graph segment. Furthermore, the plurality of intermediate name graph segments are added to the plurality of name graph segments in the name graph. Thus, the newly generated one or more name graph segment comprises knowledge which is absent in the plurality of engineering projects. Advantageously, by adding the generated plurality of intermediate name graph segments into the name graph, the processing unit 202 is generating knowledge which is non existent in the plurality of engineering projects. Thus, the processing unit is configured to generate insights, knowledge and connections which are new compared to knowledge already existing in the plurality of engineering projects.

The automation module 112 further causes the processing unit 202 to generate a plurality of knowledge graph templates for the plurality of processes of the plurality of engineering projects. The plurality of knowledge graph templates are generated based on an analysis of the plurality of name graph segments, the plurality of industrial contexts, and the name graph. Each of the plurality of knowledge graph templates comprises template based information associated with a specific process in an engineering project of the plurality of engineering projects.

A knowledge graph template associated with a specific process comprises information about one or more engineering objects required to perform the specific process in a set of industrial contexts in the plurality of engineering projects. The knowledge graph template comprises information about connection schemas, hardware and software configurations, list of variants, and programming code required to implement the specific process in the set of industrial contexts in the plurality of engineering projects. The knowledge graph template is generated from at least one name graph segment associated with each industrial context of the set of industrial contexts. Thus, advantageously, a user is enabled to use the knowledge graph template to implement the specific process in any industrial context of the set of industrial contexts.

In one example, the specific process is a heating process which requires a first engineering object "a heater" and a second engineering object "a controller". In such a case, a knowledge graph template comprises information to implement the heating process in a set of industrial contexts. The set of industrial context comprises a warming water context and a boiling water context. The knowledge graph template comprises information about a first connection schema, a first variant information, and a first programming file for the first engineering object and the second engineering object in a case where the specific process is implemented in the heating water context. For example, for the warming water context, the first engineering object and the second engineering objects are configured such that a temperature of water is maintained below 100 degree Celsius. The knowledge graph template comprises information about a second connection schema, a second variant information, and a second programming file for the first engineering object and the second engineering object in a case where the specific process is implemented in the boiling water context. For example, for the boiling water context, the first engineering object and the second engineering objects are configured such that a temperature of water is increased above 100 degree Celsius.

In one example, the plurality of knowledge graph templates are generated in a plurality of iterative stages. In a first stage of the plurality of iterative stages, the processing unit 202 is configured to select a first name graph segment from the plurality of name graph segments. The processing unit 202 is configured to analyse the first name graph segment to determine a first process associated with the first name graph segment. In a second stage, the processing unit 202 is configured to analyze each name graph segment in the plurality of groups of name graph segments to determine a set of name graph segments from the plurality of groups. The set of name graph segments is determined from each of the plurality of groups such that each name graph segment of the set of name graph segments is associated with a second process which is similar to the first process. In one example, a similarity between the first process and the second process is determined based on an analysis an arrangement of nodes in the first name graph segment and the set of name graph segments. In a case where the arrangement of nodes are similar in the first name graph and the set of name graph segments, the first process corresponding to the first name graph segment is similar to the second process corresponding to the set of name graph segments.

In a third stage of the plurality of iterative stages, the processing unit 202 is configured to analyze the first name graph segment and the set of name graph segments to determine a first set of nodes which are common in the first name graph segment and the set of name graph segments. The processing unit 202 is further configured to determine a second set of nodes from the set of name graph segments. The second set of nodes denote a plurality of differences between the first name graph segments and a second name graph segment in the set of name graph segments.

In the fourth stage of the plurality of iterative stages, the processing unit 202 is configured to generate the knowledge graph template for the first process by analysis of the first name graph segment and the set of name graph segments. The knowledge graph template comprises information associated with the first set of nodes and the second set of nodes. Thus, the knowledge graph template comprises information required to implement in the first process in the set of industrial contexts. Thus, the processing unit 202 is configured to generate the plurality of knowledge graph templates for the plurality of name graph segments. The plurality of knowledge graph templates are stored in the knowledge graph repository 126.

The automation module 112 further causes the processing unit 202 to receive a process and instrumentation diagram associated with the engineering project 106. The process and instrumentation diagram comprises is a pictorial representation of a plurality of processes which are to be implemented in the engineering project 106. In one example, the Process and Instrumentation Diagram, shows how a plurality of process equipment is connected in the engineering project. Furthermore, the process and instrumentation diagram comprises information associated with flow directions, safety and control systems, pressure ratings and other key piping and instrument details of the engineering project 106.

In one example, the process and instrumentation diagram further comprises information associated with a domain in which the engineering project 106 is implemented. The processing unit 202 is configured to receive the process and instrumentation diagram via an input device such as a camera or a scanner. In one example, the process and instrumentation diagram is an image file such as JPEG, or a bitmap image. In another example, the received process and instrumentation diagram is a portable document format.

In one example, the process and instrumentation diagram further comprises information associated with the set of engineering objects 108A-N in the engineering project 106. Furthermore, the process and instrumentation diagram comprises information associated with interconnection between the set of engineering objects 108A-N. In yet another example, the process and instrumentation diagram comprises information associated with one or more sensors which are used in the engineering project. Examples of the one or more sensors includes but is not limited to a temperature sensor, a pressure sensor, and a vibration sensor.

The automation module 112 further causes the processing unit 202 to apply an image processing algorithm on the received process and instrumentation diagram to determine the plurality of tiles in the process and instrumentation diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams.

The plurality of labelled process and instrumentation diagram comprises pictorial representations of a set of processes. The pictorial representations are labelled with a plurality of labels comprising information associated with a name of a plurality of components and also meaning of a plurality of symbols used in the plurality of process and instrumentation diagrams. Examples of the image processing algorithm includes but is not limited to a single shot detector algorithm, a spatial pyramid pooling algorithm, a you look only once algorithm, and a histogram of oriented gradients algorithm.

The automation module 112 further causes the processing unit 202 to determine the plurality of tiles in the process and instrumentation diagram. The plurality of tiles comprises the plurality of symbols in the process and instrumentation diagram. The plurality of symbols in the process and instrumentation diagram includes a first set of symbols which are indicative of a plurality of components of the engineering project. The plurality of components include one or more engineering objects and one or more connection lines which define interconnections between the one or more engineering objects. The plurality of symbols further comprises a second set of symbols which are indicative of flow directions, safety and control systems, pressure ratings and other key piping and instrument details of the engineering project. In one example, each of the plurality of tiles represent one or more engineering objects such as motors, valves and pipes in the engineering project.

The automation module 112 further causes the processing unit 202 to combine two or more tiles of the plurality of tiles to generate a plurality of modules. Each module of the plurality of modules comprises information associated with a specific functional block of at least one process of the plurality of processes in the process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit 202 is configured to identify each module of the plurality of modules based on an analysis of the process and instrumentation diagram.

The automation module 112 further causes the processing unit 202 to combine two or mode modules of the plurality of modules to determine the set of processes of the engineering project 106. In one example, the process and instrumentation diagram comprises information associated with each process in the plurality of processes in the engineering project 106. In such a case, the processing unit 202 is configured to combine the two or more modules based on an analysis of the information associated with each process in the plurality of processes.

In another example, the processing unit 202 is configured to determine a plurality of interconnections between the plurality of processes by an analysis of the process and instrumentation diagram. In one example, the plurality of interconnections between the plurality of processes are denoted as interconnections between the set of engineering objects 108AN in the process and instrumentation diagram.

The automation module 112 further causes the processing unit 202 to determine a set of knowledge graph templates which correspond to the determined plurality of processes in the engineering project 106. The set of knowledge graph templates are determined from the plurality of knowledge graph templates in the knowledge graph repository 126. Each knowledge graph of the determined set of knowledge graph templates corresponds to at least one process in the determined plurality of processes in the engineering project. The processing unit 202 is further configured to combine the determined set of knowledge graph templates to generate a process knowledge graph corresponding to the plurality of processes of the engineering project 106.

The set of knowledge graph templates comprises information associated with the set of engineering objects 108A-N which are required to perform the plurality of processes in the engineering object. The information associated with the set of engineering objects 108A-N comprises information about connection schemas, hardware and software configurations, list of variants, and programming code required to implement the plurality of processes in a plurality of industrial contexts.

The automation module 112 further causes the processing unit 202 to receive an industrial context for the engineering project. In one example, the processing unit 202 receives the industrial context for the engineering project 106 via an input device. In another example, the industrial context of the engineering project 106 is described in the process and instrumentation diagram. In such a case the processing unit 202 is configured to extract the industrial context of the engineering project 106 from the process and instrumentation diagram based on an analysis of the process and instrumentation diagram.

The automation module 112 further causes the processing unit 202 to extract, from the determined set of knowledge graph templates, information associated with the extracted industrial context. The information associated with the industrial context comprises information associated with one or more engineering objects required to implement the plurality of processes in the extracted industrial context. Information associated with the one or more engineering object comprises an optimum hardware and software configuration and an optimum variant of the one or more engineering object to perform the plurality of processes. The information further comprises information associated with a set of programming blocks from a plurality of programming blocks in the plurality of knowledge graph templates. Each of the set of programming blocks are comprises program code which is to be executed to control the one or more engineering blocks to implement at least one process of the plurality of processes of the engineering project.

The automation module 112 further causes the processing unit 202 to generate an engineering program for the engineering project 106 from the extracted information from the determined set of knowledge graph templates. Advantageously, the engineering program for the engineering project 106 automatically generated by the processing unit 202. Further advantageously, the engineering program is generated based on the name graph and the set of knowledge graph templates which contains information associated with each engineering object of the plurality of engineering object 108A-N. In one example, the processing unit 202 is configured to combine the determined set of programming blocks to generate the engineering program comprising sourcecode to control the plurality of engineering objects 108-N in the engineering projects. In such a case, the engineering project 106 comprises the engineering program and the process and instrumentation diagram. In another example, the automation module 112 causes the processing unit 202 to determine, based on the set of knowledge graph templates, one or more optimum variants of the plurality of engineering objects 108A-N for implementing the plurality of processes in the extracted industrial context. In yet another example, the automation module 112 causes the processing unit 202 to determine optimum hardware and software configuration for the plurality of engineering objects 108A-N for implementing the plurality of processes for the extracted industrial context.

In one example where the engineering project 106 comprises the programming file, the programming file comprises a process oriented program such as an International Electrotechnical Commission Programming Language (IECPL) program. In such a case, the processing unit 202 is configured to receive a plurality of modifications for the generated engineering project. The plurality of modifications is received via an input device such as a human machine interface panel or a personal computer. The processing unit 202 is further configured to execute the plurality of modifications into the generated engineering project 106 to modify the engineering program in the engineering project 106.

The automation module 112 further causes the processing unit 202 to receive a request from the user to convert the engineering project 106 into a hybrid engineering project. The hybrid engineering project comprises a plurality of object oriented program files and a plurality of IECPL program files. In one example, the request is received from the user via the input device. In one example, the request is at least one of a verbal request, a gesture based request or a text based request.

The automation module 112 further causes the processing unit 202 to generate a program name graph based on an analysis of the modified process oriented program. The program name graph comprises a plurality of nodes which comprises information associated with a plurality of commands, a plurality of subroutines, a plurality of variables present in the modified process oriented program. Furthermore, the program name graph comprises information associated with a plurality of interconnections between the plurality of commands, the plurality of subroutines, and the plurality of variables.

The automation module 112 further causes the processing unit 202 to compare one or more portions of the program name graph with the plurality of knowledge graph templates in the knowledge graph repository. In a case where the one or more portions of the program name graph matches with one or more knowledge graph templates, the processing unit 202 is configured to identify the one or more portions of the program name graph as a class entity graph portion of the program name graph. The processing unit 202 is further configured to identify a first portion of the process oriented program, as a class entity. The identified first portion of the process oriented program corresponds to the class entity portion of the program name graph. The class entity corresponds to at least one engineering object in the engineering project.

The automation module 112 further causes the processing unit 202 to determine a plurality of dataflow and control flow interrelationships between a set of engineering objects 108A-N in the engineering project 106, based on an analysis of the process name graph. The automation module 112 further causes the processing unit 202 to convert the determined plurality of interconnections into utility entities based on an analysis of the determined plurality of dataflow and control flow relationships between the set of engineering object. The automation module 112 further causes the processing unit 202 to generate the hybrid engineering project by combining the generated class entities with the determined untility entities.

The storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102.

In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a natural language processing module 308, an engineering object database 310, a validation module 312 and a deployment module 314. FIG. 3 is explained in conjunction with FIG. 1 and FIG. 2.

The request handler module 302 is configured for receiving the request to generate the engineering program for the engineering project 106. For example, the request is received from one of the one or more users external to the industrial environment 100 via the network 104. In alternative embodiment, the request is received from the one or the one or more client devices 120A-N via the network 104.

The object behavior model generation module 304 is configured for generating the name graph of the plurality of engineering projects. In a preferred embodiment, the generated name graph comprises information about relationships between a set of variables corresponding to each document of the plurality of documents and the plurality of engineering objects 108A-N of the engineering project 106. In one example, the name graph is a knowledge graph based representation comprising a plurality of layers.

The analysis module 306 is configured for analyzing the name graph to generate the plurality of knowledge graph templates. Further, the analysis module 306 is configured for applying the natural language processing algorithm on the plurality of engineering projects.

The natural language processing module 308 is configured for extracting the plurality of data items from the plurality of engineering projects.

The engineering object database 310 is configured for generating an engineering object library comprising the generated object behavior models, information about the set of engineering objects 108A-N, information about physical connections between the set of engineering objects 108A-N, and a plurality of parameter values associated with the set of engineering objects 108A-N and the physical connections. The engineering object database 310 is configured for continuously updating the engineering object library with updated versions of the engineering programs. Also, the engineering object database 310 is configured for maintaining the engineering object library in an name graph.

The validation module 312 is configured to generate a simulation instance for the set of engineering objects 108A-N of the technical installation. In one example, the simulation instance is a digital twin of the set of engineering objects 108A-N. The validation module 312 is configured to simulate execution of one or more engineering programs by the set of engineering objects 108A-N of the technical installation in a simulation environment by executing the one or more engineering programs on the generated simulation instance.

The deployment module 314 is configured for deploying the generated engineering program in one or more programmable logic controllers of the technical installation.

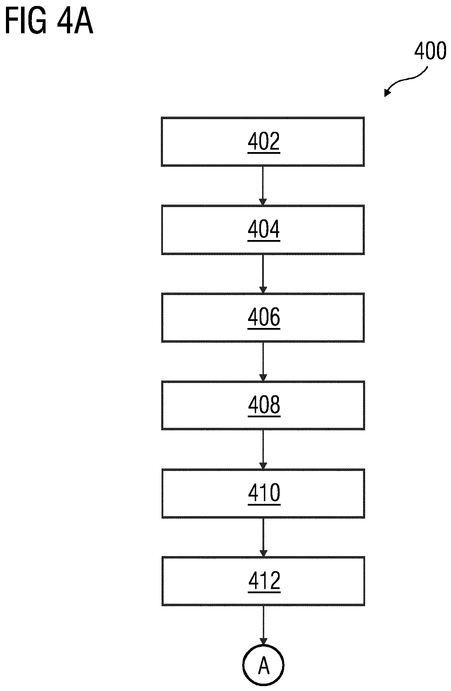

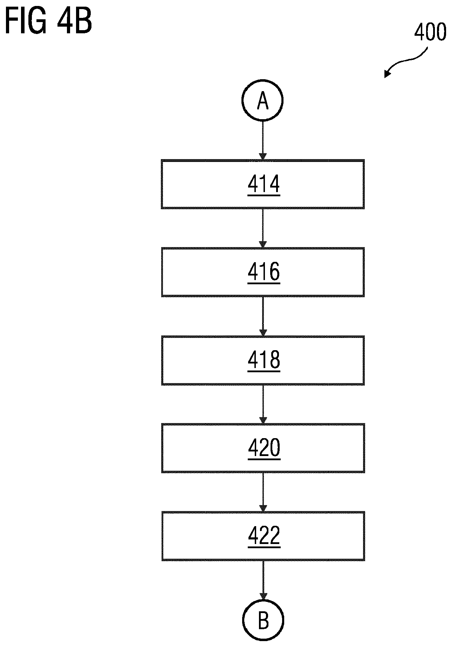

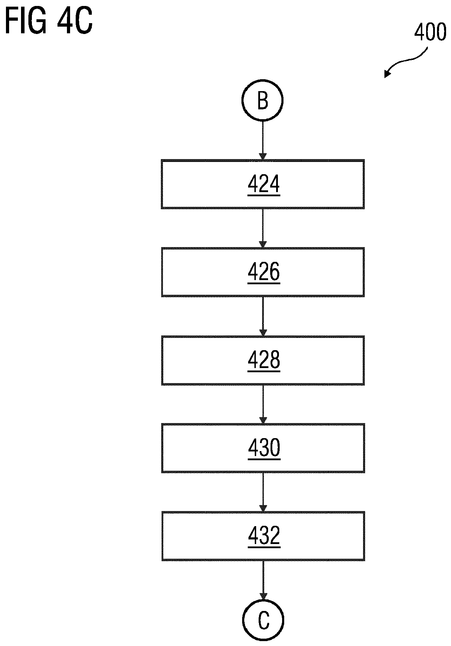

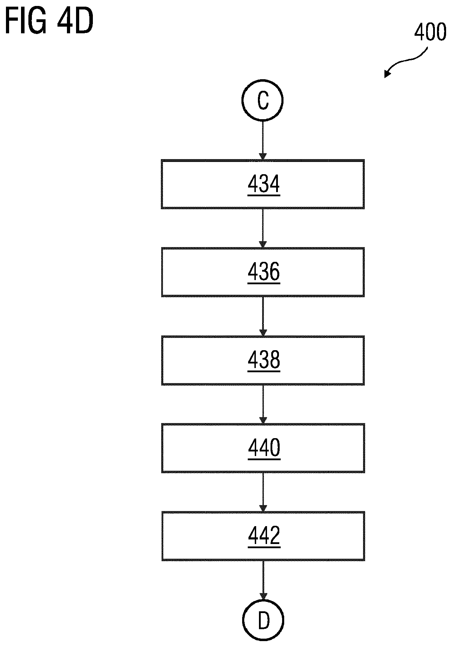

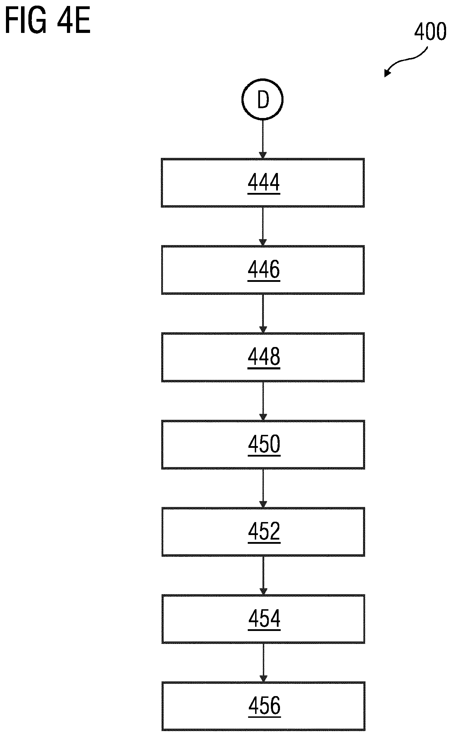

FIG 4A-E is a process flowchart illustrating an exemplary method of automatically generating an engineering program for an engineering project, according to an embodiment of the present invention. FIG 4A-D is described in conjunction with FIG 1, 2, and 3.

At step 402, the plurality of engineering projects are received by the processing unit 202 from the project repository 124. At step 404, the plurality of engineering projects is analyzed by the processing unit 202 based on an application of the natural language processing algorithm on each engineering project of the plurality of engineering projects. The natural language processing algorithm is configured to extract a plurality of data items from the analyzed plurality of engineering projects. The plurality of data items comprises information associated with each engineering object of the plurality of engineering objects in each engineering project of the plurality of engineering projects.

At step 406, the plurality of data items and the plurality of engineering projects is analyzed by the processing unit 202 by the application of the natural language processing algorithm on the plurality of data items and the plurality of engineering projects.

At step 408, a plurality of interrelationships is determined by the processing unit 202 between the plurality of data items and the plurality of engineering objects based on the analysis. In one example, the plurality of engineering projects comprises a document comprising a first statement "voltage rating of motor is 300 volts" and a second statement "a first object is a motor" . In such a case, the processing unit 202 determines a first interrelationship that the first data item (voltage rating) is linked to the second data item (300 volts). Furthermore, the processing unit 202 determines a second interrelationship that the second data item (motor) is linked to the third data item (300 volts).

In other words, the processing unit 202 is configured to determine information associated with the plurality of interrelationships between one or more data items of the plurality of data items. Further, the processing unit 202 is configured to determine the plurality of interrelationships between the plurality of data items and the plurality of engineering objects of the plurality of engineering projects based on the analysis.

At 410, a name graph is generated by the processing unit 202 based on the analysis of the plurality of data items and the plurality of engineering projects. In one example, the name graph is generated by the processing unit 202, by analysis of the determined plurality of data items and the determined plurality of interrelationships. The name graph comprises a plurality of nodes. Each node of the plurality of nodes comprises information associated with a specific engineering object of the plurality of engineering objects of the plurality of engineering projects.

At 412, the name graph is analyzed by the processing unit 202 to determine a plurality of name graph segments in the name graph. Each of the plurality of name graph segments comprises one or more nodes comprising information about a specific process in a plurality of processes implemented in the plurality of engineering projects.

At 414, the plurality of name graph segments is analyzed by the processing unit 202 to determine a logic structure of each name graph segment of the plurality of name graph segments. A logic structure of a name graph segment is indicative of an arrangement of two or more nodes in the name graph segment. In one example, the processing unit 202 is configured to determine the logic structure of each name graph segment of the plurality of name graph segment by application of a pattern recognition algorithm on a set of nodes in each name graph segment of the plurality of name graph segments. The processing unit 202 is further configured to compare the logic structure of each name graph segment of the plurality of name graph segments with each other.

At 416, two or more name graph segments are determined by the processing unit 202 from the plurality of name graph segments based on the comparison, such that the determined two or more name graph segments have similar logic structures.

At step 418, a set of name graph segments which has a plurality of logic structures which are repeated throughout the name graph are determined by the processing unit 202. In one example, the set of name graph segments are determined by application of a machine learning algorithm on the name graph. The machine learning algorithm is one of a supervised learning algorithm and an unsupervised learning algorithm. In one example, the machine learning algorithm is a pattern recognition algorithm which is configured to determine a plurality of patterns in an arrangement of the plurality of nodes in the name graph. In such a case, the machine learning algorithm is configured to determine that one or more patterns from the plurality of patterns, are repeated throughout the name graph. The set of name graph segments are determined by the processing unit 202 based on an analysis of the one or more patterns which are determined to be repeated throughout the name graph.

One or more nodes of each of the plurality of name graph segments further comprises information associated with connection of one or more engineering objects of the plurality of engineering objects with other engineering objects of the plurality of engineering objects of the plurality of engineering projects. In one example, the one or more engineering object is connected with other engineering objects via at least one of a mechanical connection, a wired communication connection or a wireless communication connection. The information associated with the connection is extracted by the processing unit 202 from a plurality of process and instrumentation diagrams in the plurality of engineering projects. The one or more nodes further comprises information associated with one or more connection diagrams, one or more user ratings, voltage ratings, power ratings, current ratings, information associated with operating systems, communication protocols, and a set of programming blocks associated with the one or more engineering objects of the plurality of engineering objects in the plurality of engineering projects. Thus, in other words, a name graph segment associated with a specific process, comprises information associated with the one or more connection diagrams, the one or more user ratings, the voltage ratings, the power ratings, current ratings, the information associated with operating systems, the communication protocols, and the set of programming blocks associated with a set of engineering objects 108A-N which are implemented to execute the specific process in at least one of the plurality of engineering projects.

At step 420 each name graph segment of the plurality of name graph segments is analyzed to determine a plurality of parameters associated with the respective name graph segment. The plurality of parameters associated with a name graph segment comprises information indicative of a specific industrial process associated with the name graph segment. In one example, the plurality of parameters associated with a name graph segment comprises information associated with usage references of each of the one or more engineering objects in the plurality of engineering projects. The information associated with the usage references of an engineering object indicates a number and type of instances in which the one or more engineering objects are used in at least one engineering project of the plurality of engineering projects, to execute the specific process in the plurality of engineering projects.

In one example, the plurality of engineering projects comprises information associated with an optimum set of operational values, an optimum hardware configuration, an optimum software configuration, and a system requirements of each engineering object of the plurality of engineering objects. In such a scenario, information associated with the optimum set of operational values, the optimum hardware configuration, the optimum software configuration, and the system requirements are present in the name graph and the plurality of name graph segments. Thus, the plurality of parameters determined from each name graph segment, comprises the optimum set of operational values, the optimum hardware configuration, the optimum software configuration, and the system requirements associated with the one or more engineering object associated with the name graph segment. It is noted that each name graph segment comprises information associated with a specific process of the plurality of processes. Thus advantageously, each name graph segment comprises the optimum set of operational values, the optimum hardware configuration, the optimum software configuration, and the system requirements associated with the one or more engineering object used to implement the specific process in the plurality of engineering projects.

At 422, the plurality of name graph segments is classified by the processing unit 202 into a plurality of groups such that each group of the plurality of groups is representative of a specific industrial context of a plurality of industrial contexts associated with the plurality of engineering projects. The plurality of industrial contexts comprise information associated with one or more specific details about each of the plurality of engineering projects. In one example, an industrial context of an engineering project denotes a domain of the engineering project. In such a case, examples of the industrial context include but is not limited to a chemical domain, a mechanical domain or an electronic domain. In another example, the industrial context of the engineering project 106 denotes a specific environment in which the engineering project 106 is implemented. In such a case, examples of the industrial context include but is not limited to a dry environment, a wet environment, and a hot environment. In yet another example, the industrial context of the engineering project 106 denotes a specific constraint associated with the engineering project 106 such as a constraint in power consumption, a constraint in costs, and a constraint in efficiency.

At 424, a plurality of alternate representations is generated by the processing unit 202 for a set of nodes in each name graph segment of each group of the plurality of groups. In one example, the plurality of alternate representations for the set of nodes in a name graph segment is generated by a plurality of steps. A first step of the plurality of steps comprises rearranging, by the processing unit 202, one or more nodes in the set of nodes of the name graph segment randomly to generate a new arrangement of the set of nodes in the name graph segment. A second step of the plurality of steps is to validate the new arrangement of the set of nodes by comparing the new arrangement of the set of nodes to a plurality of arrangements of nodes in the name graph. In a case where the new arrangement of the set of nodes is compatible with a portion of the name graph, then the new arrangement of the set of nodes is validated. A third step of the plurality of steps is that in a case where the new arrangement of the set of nodes is validated, then the new arrangement of the set of nodes is added to a context stack. The processing unit 202 is configured to generate at least one alternate representation of the plurality of alternate representations of the set of nodes based on the new arrangement of the context stack. In other words, the processing unit 202 is configured to generate the plurality of alternate representations of the set of nodes of each name graph segments of the plurality of name graph segments.

The context stack is a memory structure in which the plurality of alternate representations of the set of nodes which corresponds to each name graph segment are populated by the processing unit 202. After the plurality of alternate representations of a set of nodes of each name graph segment are populated in the context stack, the processing unit 202 is configured to determine a plurality of problem statements in each of the plurality of alternate representations in the context stack. The plurality of problem statements comprises information associated with anomalies and deficiencies in each alternate representations in the plurality of alternate representations in the context stack.

The plurality of problem statements are determined by the processing unit 202 by application of a machine learning algorithm on the plurality of alternate representation of the set of nodes of each name graph segment. The machine learning algorithm is trained by application of supervised learning on a training set comprising the plurality of engineering projects in which a plurality of anomalies are labelled. The automation module 112 further causes the processing unit 202 to determine a plurality of solutions for each of the determined plurality of problem statements by application of the machine learning algorithm on the plurality of problem statements. In one example, the plurality of problem statements are determined for the plurality of alternate representations in the context stack in an ascending order. The automation module 112 further causes the processing unit 202 to execute the plurality of solutions on the plurality of alternate representations in the context stack. Furthermore, one or more name graph segments are generated by the processing unit 202, from each alternate representation of the generated plurality of alternate representations of the set of nodes in the plurality of name graph segments. The automation module 112 further causes the processing unit 202 to append the generated one or more name graph segments into the name graph. The plurality of alternate representations of the set of nodes is indicative of knowledge which is newly generated from existing knowledge in the name graph and the plurality of name graph segments. Thus, the newly generated one or more name graph segment comprises knowledge which is absent in the plurality of engineering projects. Advantageously, by appending the generated one or more name graph segments into the name graph, the processing unit 202 is generating knowledge which is non existent in the plurality of engineering projects. Thus, the processing unit 202 is configured to generate insights, knowledge and connections which are new compared to knowledge already existing in the plurality of engineering projects.

In another example, the plurality of alternate representations for the set of nodes associated with each group of the plurality of groups is generated in a plurality of iterative stages. In a first iterative stage, the processing unit 202 is configured to select a first industrial context from the plurality of industrial contexts. In a second stage, the processing unit 202 is configured to select a specific name graph segment of the plurality of name graph segments based on the selected first industrial context. In the third stage, the processing unit 202 is configured to load the specific name graph segment into an active section of the name graph. In the fourth stage, the processing unit 202 is configured to iteratively generate a set of alternate representations for a set of nodes in the specific name graph segments by rearranging the set of nodes. In the fifth stage, the processing unit 202 is configured to determine whether if all possible alternate representations, for the set of nodes, are present in the set of alternate representations. In a case where all possible alternate representations are determined to be generated, the processing unit 202 is configured to select a second industrial context from the plurality of industrial contexts such that the second industrial context is different from the first industrial contexts. The processing unit 202 is further configured to move the specific name graph segment from the active section of the name graph to a latent section of the name graph. The processing unit 202 is further configured to then restart the plurality of iterative stages for the selected second industrial context.

The processing unit 202 is configured to continue executing the plurality of iterative stages until the plurality of alternate representations for each name graph segment of the plurality of name graph segments are generated. Furthermore, the processing unit 202 is further configured to generate one or more name graph segments based on the plurality of alternate representations of the set of nodes. Furthermore, the processing unit 202 is configured to add the newly generated one or more name graph segments in the plurality of name graph segments. In other words, the name graph comprises information about the plurality of alternate representations of the plurality of nodes of the name graph.

At 426, a first industrial context and a second industrial context are selected by the processing unit 202 from the plurality of industrial contexts. The processing unit 202 is further configured to determine a first name graph segment which corresponds to the first industrial context and a second name graph segment which corresponds to the second industrial context. The processing unit 202 is further configured to determine a plurality of differences between the first name graph segment and the second name graph segment based on a comparison between the first and the second name graph segment. The processing unit 202 is further configured to analyze the plurality of differences to determine a plurality of changes which has to be implemented in the first name graph segment to convert the first name graph segment to the second name graph segment. At 428, the first name graph segment is modified by the processing unit 202 based one the determined plurality of changes to iteratively generate a plurality of intermediate name graph segments.

Each of the plurality of intermediate name graph segments denote transition stages between the first name graph segment and the second name graph segment. To generate an intermediate name graph segment of the plurality of intermediate name graph segments, the processing unit 202 is configured to implement at least one change, from the plurality of changes, on the first name graph segment. The processing unit 202 is further configured to tag each of the plurality of intermediate name graph segments to one of the first name graph segment or the second name graph segment. In one example, the processing unit 202 is configured to assign the first industrial context to each of the intermediate name graph segments which are tagged to the first name graph segment. Similarly, the processing unit 202 is configured to assign the second industrial context to each of the intermediate name graph segments which are tagged to the second name graph segment. Furthermore, the plurality of intermediate name graph segments are added to the plurality of name graph segments in the name graph. Thus, the newly generated one or more name graph segment comprises knowledge which is absent in the plurality of engineering projects. Advantageously, by adding the generated plurality of intermediate name graph segments into the name graph, the processing unit 202 is generating knowledge which is non existent in the plurality of engineering projects. Thus, the processing unit 202 is configured to generate insights, knowledge and connections which are new compared to knowledge already existing in the plurality of engineering projects.

At 430, the plurality of knowledge graph templates is generated by the processing unit 202 for the plurality of processes of the plurality of engineering projects. The plurality of knowledge graph templates are generated based on an analysis of the plurality of name graph segments, the plurality of industrial contexts, and the name graph. Each of the plurality of knowledge graph templates comprises template based information associated with a specific process in an engineering project of the plurality of engineering projects.

In one example, the plurality of knowledge graph templates are generated in a plurality of iterative stages. In a first stage of the plurality of iterative stages, the processing unit 202 is configured to select a first name graph segment from the plurality of name graph segments. The processing unit 202 is configured to analyse the first name graph segment to determine a first process associated with the first name graph segment. In a second stage, the processing unit 202 is configured to analyze each name graph segment in the plurality of groups of name graph segments to determine a set of name graph segments from the plurality of groups. The set of name graph segments is determined from each of the plurality of groups such that each name graph segment of the set of name graph segments is associated with a second process which is similar to the first process. In one example, a similarity between the first process and the second process is determined based on an analysis an arrangement of nodes in the first name graph segment and the set of name graph segments. In a case where the arrangement of nodes are similar in the first name graph and the set of name graph segments, the first process corresponding to the first name graph segment is similar to the second process corresponding to the set of name graph segments.

In a third stage of the plurality of iterative stages, the processing unit 202 is configured to analyze the first name graph segment and the set of name graph segments to determine a first set of nodes which are common in the first name graph segment and the set of name graph segments. The processing unit 202 is further configured to determine a second set of nodes from the set of name graph segments. The second set of nodes denote a plurality of differences between the first name graph segments and a second name graph segment in the set of name graph segments.

In the fourth stage of the plurality of iterative stages, the processing unit 202 is configured to generate the knowledge graph template for the first process by analysis of the first name graph segment and the set of name graph segments. The knowledge graph template comprises information associated with the first set of nodes and the second set of nodes. Thus, the knowledge graph template comprises information required to implement in the first process in the set of industrial contexts. Thus, the processing unit 202 is configured to generate the plurality of knowledge graph templates for the plurality of name graph segments. The plurality of knowledge graph templates are stored in the knowledge graph repository 126.

At step 432, a process and instrumentation diagram associated with the engineering project 106 is received by the processing unit 202. The process and instrumentation diagram comprises is a pictorial representation of a plurality of processes which are to be implemented in the engineering project 106. In one example, the Process and Instrumentation Diagram, shows how a plurality of process equipment is connected in the engineering project. Furthermore, the process and instrumentation diagram comprises information associated with flow directions, safety and control systems, pressure ratings and other key piping and instrument details of the engineering project 106.

In one example, the process and instrumentation diagram further comprises information associated with a domain in which the engineering project 106 is implemented. The processing unit 202 is configured to receive the process and instrumentation diagram via an input device such as a camera or a scanner. In one example, the process and instrumentation diagram is an image file such as JPEG, or a bitmap image. In another example, the received process and instrumentation diagram is a portable document format.

At step 434 an image processing algorithm is applied by the processing unit 202 on the received process and instrumentation diagram to determine the plurality of tiles in the process and instrumentation diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams.

The plurality of labelled process and instrumentation diagram comprises pictorial representations of a set of processes. The pictorial representations are labelled with a plurality of labels comprising information associated with a name of a plurality of components and also meaning of a plurality of symbols used in the plurality of process and instrumentation diagrams. Examples of the image processing algorithm includes but is not limited to a single shot detector algorithm, a spatial pyramid pooling algorithm, a you look only once algorithm, and a histogram of oriented gradients algorithm.

At step 436 the plurality of tiles are determined by the processing unit 202 in the process and instrumentation diagram. The plurality of tiles comprises the plurality of symbols in the process and instrumentation diagram. The plurality of symbols in the process and instrumentation diagram includes a first set of symbols which are indicative of a plurality of components of the engineering project. The plurality of components include one or more engineering objects and one or more connection lines which define interconnections between the one or more engineering objects. The plurality of symbols further comprises a second set of symbols which are indicative of flow directions, safety and control systems, pressure ratings and other key piping and instrument details of the engineering project. In one example, each of the plurality of tiles represent one or more engineering objects such as motors, valves and pipes in the engineering project.

At 438, two or more tiles of the plurality of tiles are combined by the processing unit 202 to generate a plurality of modules. Each module of the plurality of modules comprises information associated with a specific functional block of at least one process of the plurality of processes in the process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit 202 is configured to identify each module of the plurality of modules based on an analysis of the process and instrumentation diagram.

At 440, two or mode modules of the plurality of modules are combined by the processing unit 202 to determine the set of processes of the engineering project 106. In one example, the process and instrumentation diagram comprises information associated with each process in the plurality of processes in the engineering project 106. In such a case, the processing unit 202 is configured to combine the two or more modules based on an analysis of the information associated with each process in the plurality of processes.

In another example, the processing unit 202 is configured to determine a plurality of interconnections between the plurality of processes by an analysis of the process and instrumentation diagram. In one example, the plurality of interconnections between the plurality of processes are denoted as interconnections between the set of engineering objects 108AN in the process and instrumentation diagram.

At 442, a set of knowledge graph templates are determined by the processing unit 202. The determined set of knowledge graph templates correspond to the determined plurality of processes in the engineering project. The set of knowledge graph templates are determined from the plurality of knowledge graph templates in the knowledge graph repository. Each knowledge graph of the determined set of knowledge graph templates corresponds to at least one process in the determined plurality of processes in the engineering project. The processing unit 202 is further configured to combine the determined set of knowledge graph templates to generate a process knowledge graph corresponding to the plurality of processes of the engineering project 106.

The set of knowledge graph templates comprises information associated with the set of engineering objects 108A-N which are required to perform the plurality of processes in the engineering object. The information associated with the set of engineering objects 108A-N comprises information about connection schemas, hardware and software configurations, list of variants, and programming code required to implement the plurality of processes in a plurality of industrial contexts.

At step 444 an industrial context is selected by the processing unit 202 for the engineering project 106. In one example, the processing unit 202 receives the industrial context for the engineering project 106 via an input device. In another example, the industrial context of the engineering project 106 is described in the process and instrumentation diagram. In such a case the processing unit 202 is configured to extract the industrial context of the engineering project 106 from the process and instrumentation diagram based on an analysis of the process and instrumentation diagram.

At step 446, information associated with the extracted industrial context is extracted by the processing unit 202, from the set of knowledge graph templates. The information associated with the industrial context comprises information associated with one or more engineering objects required to implement the plurality of processes in the extracted industrial context. Information associated with the one or more engineering object comprises an optimum hardware and software configuration and an optimum variant of the one or more engineering object to perform the plurality of processes. The information further comprises information associated with a set of programming blocks from a plurality of programming blocks in the plurality of knowledge graph templates. Each of the set of programming blocks are comprises program code which is to be executed to control the one or more engineering blocks to implement at least one process of the plurality of processes of the engineering project.

At step 448, an engineering program for the engineering project 106 is generated by the processing unit 202 from the extracted information from the determined set of knowledge graph templates. Advantageously, the engineering program for the engineering project 106 is automatically generated by the processing unit 202. Further advantageously, the engineering program is generated based on the name graph and the set of knowledge graph templates which contains information associated with each engineering object of the set of engineering object 108A-N. In one example, the processing unit is configured to combine the determined set of programming blocks to generate the engineering program comprising sourcecode to control the set of engineering objects 108-N in the engineering projects. In such a case, the engineering project 106 comprises the engineering program and the process and instrumentation diagram. In another example, the automation module 112 causes the processing unit 202 to determine, based on the set of knowledge graph templates, one or more optimum variants of the set of engineering objects 108A-N for implementing the plurality of processes in the extracted industrial context. In yet another example, the automation module causes the processing unit 202 to determine optimum hardware and software configuration for the set of engineering objects 108A-N for implementing the plurality of processes for the extracted industrial context. Advantageously, the engineering program is generated in accordance with a plurality of parameters associated with the set of engineering objects 108A-N, such as the set of industrial contexts, the plurality of variants, the hardware configurations, the software configurations, and the plurality of interconnections of the set of engineering objects 108A-N. Thus, time and labour spent by a human code developer to study a plurality of parameters of the engineering project 106, is significantly reduced. In one example, the generated engineering program is a process oriented program.

At step 450, a request is received from the processing unit 202 from the user. The request is to convert the engineering project 106 into a hybrid engineering project. The hybrid engineering project comprises a plurality of object oriented program files and a plurality of IECPL program files. In one example, the request is received from the user via the input device. In one example, the request is at least one of a verbal request, a gesture based request or a text based request.

At step 452, a program name graph is generated by the processing unit 202 based on an analysis of the process oriented program. The program name graph comprises a plurality of nodes which comprises information associated with a plurality of commands, a plurality of subroutines, a plurality of variables present in the modified process oriented program. Furthermore, the program name graph comprises information associated with a plurality of interconnections between the plurality of commands, the plurality of subroutines, and the plurality of variables.

At step 454, one or more portions of the program name graph are compared by the processing unit 202 with the plurality of knowledge graph templates in the knowledge graph repository. In a case where the one or more portions of the program name graph matches with one or more knowledge graph templates, the processing unit 202 is configured to identify the one or more portions of the program name graph as a class entity graph portion of the program name graph. The processing unit 202 is further configured to identify a first portion of the process oriented program, as a class entity. The identified first portion of the process oriented program corresponds to the class entity portion of the program name graph. The class entity corresponds to at least one engineering object in the engineering project.

At step 454, a plurality of dataflow and control flow interrelationshipsv are determined by the processing unit 202 between the set of engineering objects 108A-N in the engineering project, based on an analysis of the process name graph. The determined plurality of interconnections are converted by the processing unit 202 into utility entities based on an analysis of the determined plurality of dataflow and control flow relationships between the set of engineering object. At step 456, the hybrid engineering project is generated by the processing unit 202 by combining the generated class entities with the determined untility entities.

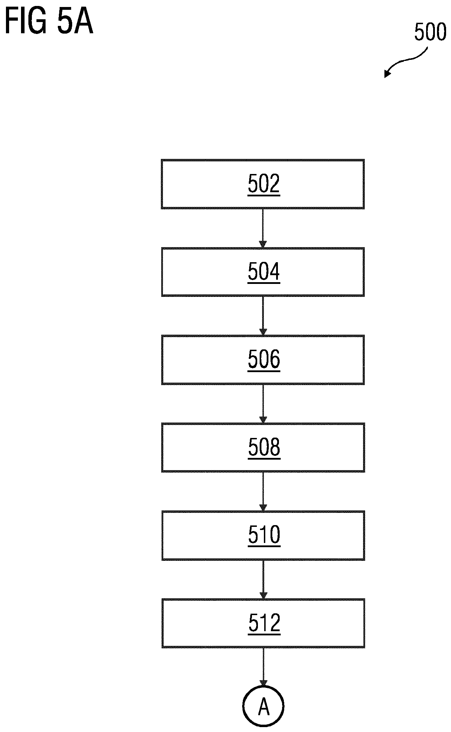

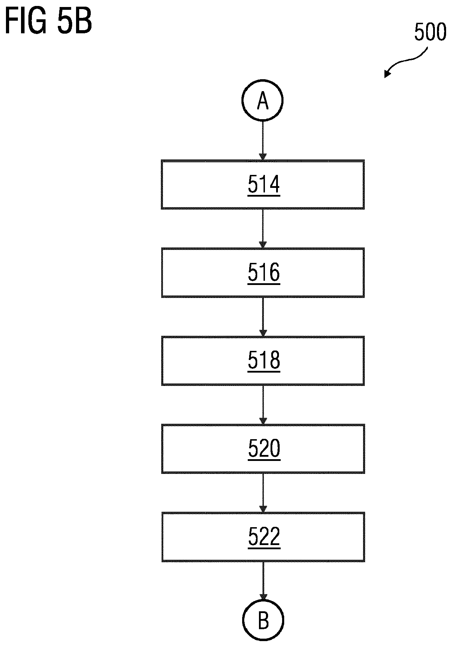

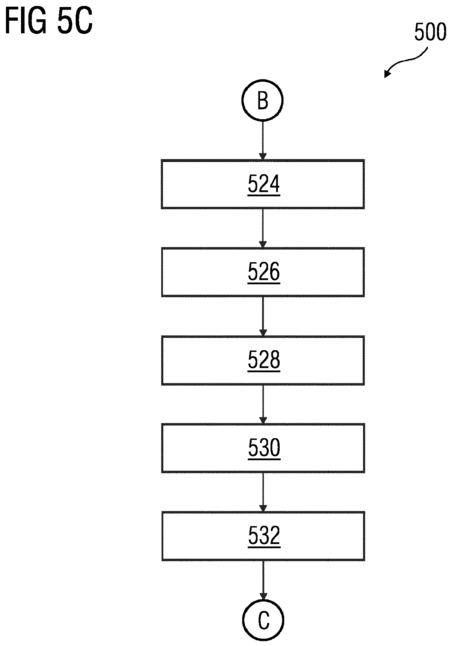

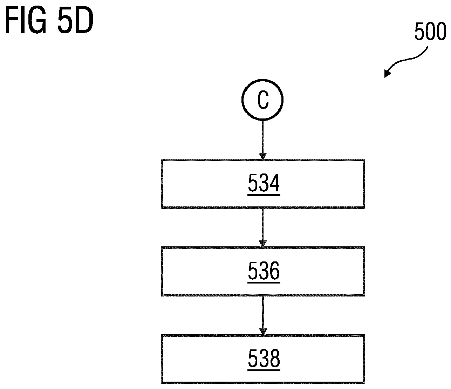

FIG 5A-D is a flowchart illustrating an exemplary method 500 of generating a plurality of knowledge templates, according to an embodiment of the present invention. FIG 4A-D is described in conjunction with FIG 1, 2, 3 and 4.

At step 502, the plurality of engineering projects are received by the processing unit 202 from the project repository 124. At step 504, the plurality of engineering projects is analyzed by the processing unit 202 based on an application of the natural language processing algorithm on each engineering project of the plurality of engineering projects. At step 506, the plurality of data items and the plurality of engineering projects is analyzed by the processing unit 202 by the application of the natural language processing algorithm on the plurality of data items and the plurality of engineering projects. At step 508, a plurality of interrelationships is determined by the processing unit 202 between the plurality of data items and the plurality of engineering objects based on the analysis. At 510, a name graph is generated by the processing unit 202 based on the analysis of the plurality of data items and the plurality of engineering projects. At 512, the name graph is analyzed by the processing unit 202 to determine a plurality of name graph segments in the name graph. At step 514, a set of name graph segments which has a plurality of logic structures which are repeated throughout the name graph are determined by the processing unit 202.

At step 516 each name graph segment of the plurality of name graph segments is analyzed to determine a plurality of parameters associated with the respective name graph segment.

At step 518, the plurality of name graph segments is classified by the processing unit 202 into a plurality of groups such that each group of the plurality of groups is representative of a specific industrial context of a plurality of industrial contexts associated with the plurality of engineering projects.

At 520, a plurality of alternate representations is generated by the processing unit 202 for a set of nodes in each name graph segment of each group of the plurality of groups. In one example, the plurality of alternate representations for the set of nodes in a name graph segment is generated by a plurality of steps. In a first step (522) of the plurality of steps one or more nodes in the set of nodes of the name graph segment are rearranged by the processing unit 202 randomly to generate a new arrangement of the set of nodes in the name graph segment. In a second step (524) of the plurality of steps the new arrangement of the set of nodes is validated by the processing unit 202 by comparing the new arrangement of the set of nodes to a plurality of arrangements of nodes in the name graph. In a third step (526) of the plurality of steps is that in a case where the new arrangement of the set of nodes is validated, then the new arrangement of the set of nodes is added to a context stack. The processing unit is configured to generate at least one alternate representation of the plurality of alternate representations of the set of nodes based on the new arrangement of the context stack. In other words, the processing unit 202 is configured to generate the plurality of alternate representations of the set of nodes of each name graph segments of the plurality of name graph segments.

At step 528, a plurality of problem statements are determined by the processing unit 202 in each of the plurality of alternate representations in the context stack. The plurality of problem statements comprises information associated with anomalies and deficiencies in each alternate representations in the plurality of alternate representations in the context stack.

The plurality of problem statements are determined by the processing unit 202 by application of a machine learning algorithm on the plurality of alternate representation of the set of nodes of each name graph segment. The machine learning algorithm is trained by application of supervised learning on a training set comprising the plurality of engineering projects in which a plurality of anomalies are labelled. At 530, a plurality of solutions are determined by the processing unit 202 for each of the determined plurality of problem statements by application of the machine learning algorithm on the plurality of problem statements. In one example, the plurality of problem statements are determined for the plurality of alternate representations in the context stack in an ascending order.

At step 532, the plurality of solutions are executed by the processing unit 202 on the plurality of alternate representations in the context stack. Furthermore, one or more name graph segments are generated by the processing unit, from each alternate representation of the generated plurality of alternate representations of the set of nodes in the plurality of name graph segments. At step 534, the generated one or more name graph segments are appended by the processing unit 202 into the name graph.

Furthermore, a first industrial context and a second industrial context are selected by the processing unit 202 from the plurality of industrial contexts. The processing unit 202 is further configured to determine a first name graph segment which corresponds to the first industrial context and a second name graph segment which corresponds to the second industrial context. The processing unit 202 is further configured to determine a plurality of differences between the first name graph segment and the second name graph segment based on a comparison between the first and the second name graph segment. The processing unit 202 is further configured to analyze the plurality of differences to determine a plurality of changes which has to be implemented in the first name graph segment to convert the first name graph segment to the second name graph segment. At 536, the first name graph segment is modified by the processing unit 202 based on the determined plurality of changes to iteratively generate a plurality of intermediate name graph segments.

At 538, the plurality of knowledge graph templates is generated by the processing unit 202 for the plurality of processes of the plurality of engineering projects. The plurality of knowledge graph templates are generated based on an analysis of the plurality of name graph segments, the plurality of industrial contexts, and the name graph. Each of the plurality of knowledge graph templates comprises template based information associated with a specific process in an engineering project of the plurality of engineering projects.

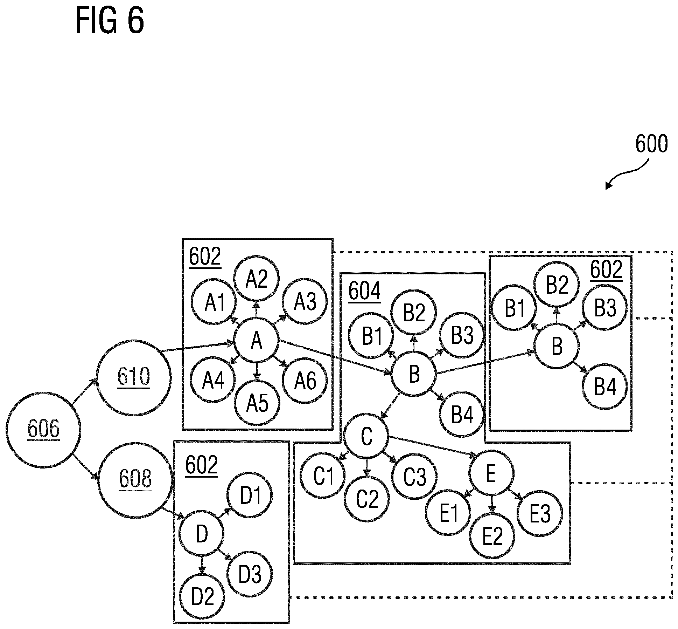

FIG 6 is a schematic representation of an exemplary process of generating a plurality of name graph segments from a name graph 600, according to an embodiment of the present invention. The name graph 600 comprise a plurality of nodes such as A1-A6, B1-B4, C1-C3, D1-D3, and E1-E3.

The name graph 600 comprise a start node 606. Furthermore, the name graph 600 comprises an active section 610 and a latent section 608. The processing unit 202 is configured to generate a plurality of name graph segments (602 and 604) by application of an artificial intelligence algorithm on the name graph 600.

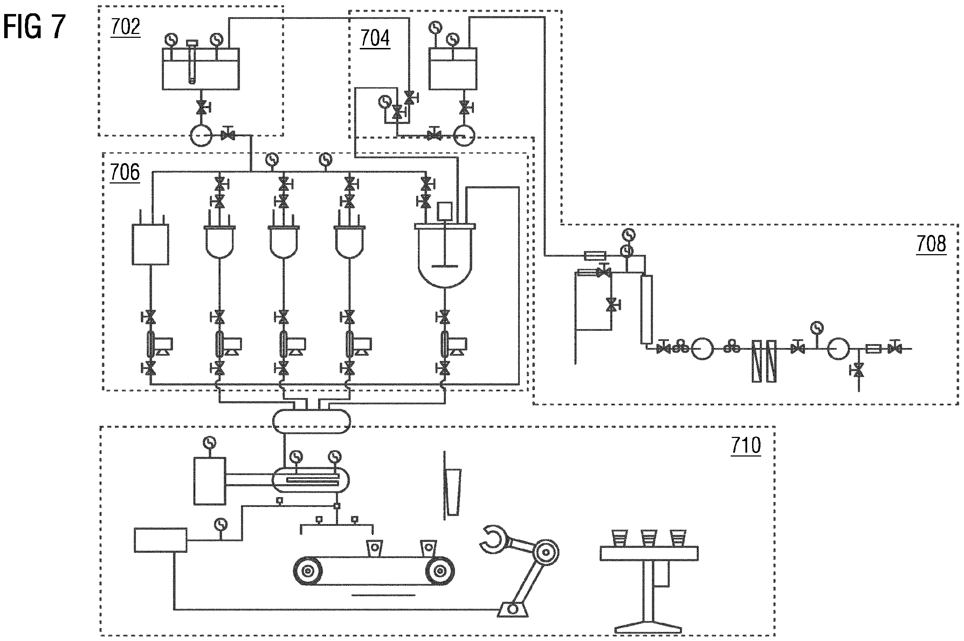

FIG 7 is a schematic representation of an exemplary process of determining a plurality of processes in a process and instrumentation diagram, according to an embodiment of the present invention. FIG 7 illustrate a process and instrumentaion diagram. The processing unit 202 is configured to determine a plurality of processes (702,704, 706, 708, and 710) from the process and instrumentation diagram by application of an image processing algorithm on the process and instrumentation diagram.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference sign list

1. an industrial environment 100
2. an engineering system 102
3. one or more client devices 120A-N
4. a network 104
5. A set of engineering objects 108A-N
6. a platform 110
7. automation module 112
8. a server 114
9. a network interface 116
10. a database 118
11. a project repository 124
12. knowledge repository 126
13. a processor(s) 202
14. an accessible memory 204
15. a storage unit 206
16. a communication interface 208
17. an input-output unit 210
18. a network interface 212
19. a bus 214
20. an integrated development environment (IDE) 216
21. a request handler module 302,
22. a object behavior model generation module 304,
23. an analysis module 306,
24. a natural language processing module 308
25. an engineering object database 310
26. a validation module 312
27. a deployment module 314.

## Claims

1. A computer implemented method of generation of engineering program for an engineering project (106), the method comprising:
generating, by a processing unit (202), a plurality of knowledge graph templates for a plurality of processes implemented in a plurality of engineering projects;
analyzing, by the processing unit (202), a process and instrumentation diagram associated with the engineering project (106), wherein the process and instrumentation diagram comprises information associated with a set of engineering objects 108A-N of the engineering project (106);
determining, by the processing unit (202), a set of processes in the engineering project (106) based on an application of an image processing algorithm on the process and instrumentation diagram;
determining, by the processing unit (202), a set of knowledge graph templates from the generated plurality of knowledge graph templates based on an analysis of the determined set of processes in the engineering project; and
generating, by the processing unit (202), an engineering program for the set of engineering objects (108A-N) of the engineering project (106) based on the determined set of knowledge graph templates.

2. The method according to claim 1, wherein generating the plurality of knowledge graph templates comprises:
receiving, by the processing unit, a plurality of engineering projects;
analyzing, by the processing unit (202), the received plurality of engineering projects by application of a natural language processing algorithm on each engineering project of the plurality of engineering projects;
extracting, by the processing unit (202), a plurality of data items from the plurality of engineering projects based on the analysis;
determining, by the processing unit (202), a plurality of interrelationships between the plurality of data items and the plurality of engineering objects of the plurality of engineering project; and
generating, by the processing unit (202), a name graph based on an analysis of the determined plurality of data items and the determined plurality of interrelationships, wherein the name graph comprises:
information associated with the plurality of processes in the plurality of engineering projects, and
information about the plurality of engineering objects configured to implement the plurality of processes in the plurality of engineering projects.

3. The method according to claims 1 and 2, wherein generating the plurality of knowledge graph templates comprises:
analyzing, by the processing unit (202), the name graph to determine a plurality of name graph segments from the name graph, wherein each name graph segment of the plurality of name graph segments is indicative of a specific process of the plurality of processes in the plurality of engineering projects;
determining, by the processing unit (202), a logic structure for each name graph segment of the plurality of name graph segments based on an analysis of the plurality of name graph segments;
classifying, by the processing unit (202), the plurality of name graph segments into a plurality of groups such that each group of the plurality of groups is indicative of a specific industrial context of a plurality of industrial contexts of the plurality of engineering objects;
generating, by the processing unit (202), a plurality of alternate representations for a set of nodes for each name graph segment of the plurality of name graph segments based on an analysis of the plurality of industrial contexts;
generating, by the processing unit (202), a plurality of intermediate name graph segments between each pair of name graph segments in the plurality of name graph segments; and
generating, by the processing unit (202), the plurality of knowledge graph templates for the plurality of processes of the plurality of engineering projects, wherein the plurality of knowledge graph templates are generated based on an analysis of the plurality of name graph segments, the plurality of industrial contexts, and the name graph.

4. The method according to claim 3, wherein generating at least one alternate representation of the plurality of alternate representations for the set of nodes of each name graph segment comprises:
rearranging, by the processing unit (202), one or more nodes in the set of nodes of the name graph segment randomly to generate a new arrangement of the set of nodes in the name graph segment;
comparing, by the processing unit (202), the new arrangement of the set of nodes to a plurality of arrangements of nodes in the name graph;
validating, by the processing unit (202), the new arrangement of the set of nodes based on the comparison;
adding by the processing unit (202), when the new arrangement is validated, the new arrangement of the set of nodes to a context stack; and
generating, by the processing unit (202), at least one alternate representation of the set of nodes from the new arrangement of the set of nodes.

5. The method according to claims 1, 2, 3, or 4, further comprising:
determining, by the processing unit (202), a plurality of problem statements from each of the generated plurality of alternate representations by application of a machine learning algorithm on each alternate representation of the plurality of alternate representations;
determining, by the processing unit (202), a plurality of solutions based on an analysis of the determined plurality of problem statements for each of the generated plurality of alternate representations of the set of nodes of each name graph segment of the plurality of name graph segments;
executing, by the processing unit (202), the plurality of solutions on each alternate representation of the plurality of alternate representations of the set of nodes;
generating, by the processing unit (202), one or more name graph segments based on an analysis of the plurality of alternate representations of each of the plurality of name graph segments, the plurality of problem statements, and the plurality of solutions; and
appending, by the processing unit, the generated one or more name graph segments into the name graph.

6. The method according to claims 1, 2, 3, 4, and 5, wherein generating, the plurality of intermediate name graph segments comprises:
selecting, by the processing unit (202), a first industrial context and a second industrial context from the plurality of industrial contexts;
determining, by the processing unit (202), a first name graph segment corresponding to the first industrial context and a second name graph segment corresponding to the second industrial context from the plurality of name graph segments;
determining, by the processing unit (202), a plurality of differences between the first name graph segment and the second name graph segment based on an analysis of the first and the second name graph segments; and
generating, by the processing unit (202), the plurality of intermediate name graph segments based on the determined plurality of differences between the first name graph segment and the second name graph segment, wherein the plurality of intermediate name graph segments are indicative of a plurality of transition stages between the first name graph segment and the second name graph segments.

7. The method according to claim 6, wherein the generation of the plurality of knowledge graph templates for the plurality of processes of the engineering project (106) is performed iteratively in a plurality of iterative stages, wherein the plurality of iterative stages comprises:
selecting, by the processing unit (202), a first name graph segment from the plurality of name graph segments;
analyzing, by the processing unit (202), the first name graph segment to determine a first process associated with the first name graph segment;
analyzing, by the processing unit (202), each name graph segment in the plurality of groups of name graph segments to determine a set of name graph segments from the plurality of groups such that each name graph segment of the set of name graph segments is associated with a second process which is similar to the first process; and
generating, by the processing unit (202), at least one knowledge graph template for the first process based on an analysis of the first name graph segment and the set of name graph segments.

8. The method according to claim 7, wherein the determination of the set of processes in the engineering project (106) comprises:
applying, by the processing unit, the image processing algorithm on the received process and instrumentation diagram to determine a plurality of tiles in the process and instrumentation diagram;
combining, by the processing unit, two or more tiles of the plurality of tiles to generate a plurality of modules; and
combining, by the processing unit, two or mode modules of the plurality of modules to determine the set of processes of the engineering project (106).

9. The method according to claim 8, wherein the generation of the engineering program for the one or more engineering objects of the engineering project based on the determined set of knowledge graph templates comprises:
receiving, by the processing unit, an industrial context for the engineering project (106);
extracting from the determined set of knowledge graph templates, by the processing unit, information associated with the extracted industrial context; and
generating, by the processing unit, the engineering program from the extracted information from the determined set of knowledge graph templates.

10. The method according to claim 9, further comprising:
generating, by the processing unit (202), information associated one or more optimum variants of the one or more engineering objects for implementing the set of processes in the extracted industrial context of the engineering project; and
generating, by the processing unit (202), information associated with optimum hardware and software configuration for the one or more engineering objects for implementing the set of processes for the extracted industrial context in the engineering project (106).

11. The method according to claim 10, further comprising:
receiving, by the processing unit (202), a plurality of modifications for the generated engineering program, from a user;
modifying, by the processing unit (202), the engineering program based on the plurality of modifications received from the user;
generating, by the processing unit, a program name graph based on an analysis of the modified engineering program; and
comparing, by the processing unit, one or more portions of the program name graph with one or more knowledge graph templates in the plurality of knowledge graph templates.

12. The method according to claim 11, further comprising:
identifying, by the processing unit, when the one or more portions of the program name graph matches with one or more knowledge graph templates, the one or more portions of the program name graph as a class entity graph portion of the program name graph;
determining, by the processing unit, a first portion of the engineering program as a class entity wherein the first portion corresponds to the identified class entity graph portion of the program name graph;
determining, by the processing unit, a plurality of dataflow and control flow interrelationships between a set of engineering objects in the engineering project, based on an analysis of the process name graph;
converting, by the processing unit, the determined plurality of interconnections into utility entities based on an analysis of the determined plurality of dataflow and control flow relationships between the set of engineering object; and
generating, by the processing unit, a hybrid engineering project for the engineering project (202) by combining the generated class entities and the determined utility entities, wherein the hybrid engineering project comprises a first portion coded in object oriented programming format and a second portion coded in process oriented programming format.

13. An engineering system for automatic generation of an engineering program for an engineering project, wherein the engineering system comprises:
one or more processor(s) (202); and
a memory (204) coupled to the one or more processor(s), wherein the memory comprises an automation module (112) stored in the form of machine-readable instructions executable by the one or more processor(s), wherein the automation module (112) is capable of performing a method according to any of the claims 1-12.

14. An industrial environment (100) comprising:
an engineering system (102) as claimed in claim 10;
a technical installation comprising one or more physical components; and
one or more client devices (120A-N) communicatively coupled to the engineering system (102) via a network (104), wherein the engineering system (102) is configured to perform a method according to any of the claims 1 to 12.

15. A computer-program product, having machine-readable instructions stored therein, that when executed by a processing unit (202), cause the processors to perform a method according to any of the claims 1-12.
